# EUROPEAN PATENT SPECIFICATION

(11) **EP 4 464 209 B1**
(45) Date of publication and mention of the grant of the patent: **20.05.2026**
(21) Application number: 23210209.5
(22) Date of filing: 15.11.2023
(51) Int. Cl.: A47J 37/06

(54) **AIR FRYER**
LUFTFRITEUSE
FRITEUSE À AIR CHAUD

(30) Priority: 19.05.2023 CN 202310570893
(43) Date of publication of application: 20.11.2024
(73) Proprietor: Foshan Shunde Midea Electrical Heating Appliances Manufacturing Co., Ltd., Foshan, Guangdong 528311 (CN)
(72) Inventor: WANG, Tuan, Guangdong, 528311 (CN); XU, Zhibo, Guangdong, 528311 (CN); CAO, Wel, Guangdong, 528311 (CN); ZHAO, Hang, Guangdong, 528311 (CN); SUN, Honglei, Guangdong, 528311 (CN); SU, Xiaochi, Guangdong, 528311 (CN)
(74) Representative: Treeby, Philip David William

(56) References cited:
- WO-A1-2022/170239
- CN-U- 206 080 273

## Description

### FIELD

The present disclosure relates to the field of air fryers, and particularly relates to an air fryer.

### BACKGROUND

In the related art, an air fryer does not have a smoking function, users usually use other cooking utensils to smoke foods after they heat the foods with the air fryer, and thus the operation is complicated. WO2022170239A1 relates generally to an air fry expansion module configured to be used with an existing cooking appliance to allow the appliance to function as an air fryer.

### SUMMARY

The present disclosure aims to solve at least one of the problems that exist in the prior art or related art.

Thus, an aspect of the present disclosure proposes an air fryer.

In view of this, an aspect according to the present disclosure proposes an air fryer, comprising: a machine, provided with a cooking cavity and an oil receiving tray, and the oil receiving tray is located at one side of the cooking cavity, and the oil receiving tray is provided with an overflowing portion; a smoke box, provided in the machine, and the smoke box communicates with the cooking cavity through the overflowing portion; and a heating member, provided in the machine, and the heating member is at least configured to supply heat to the smoke box.

The air fryer provided by the present disclosure comprises the machine, the smoke box and the heating member.

The machine is provided with the cooking cavity and the oil receiving tray, the oil receiving tray is provided with the overflowing portion, and the smoke box communicates with the cooking cavity through the overflowing portion.

In an embodiment, food materials are placed in the cooking cavity and cooked in the cooking cavity, to meet use needs such as air-frying, heating and baking food materials.

And, the smoke box communicates with the cooking cavity through the overflowing portion of the oil receiving tray, the heating member heats the smoke box, the smoking materials in the smoke box are carbonized due to high temperature and give off smoke, and the smoke can flow to the cooking cavity to smoke the food materials.

In an embodiment, the food materials are placed in the cooking cavity. The smoking materials (in some embodiments, wood chips) are placed in the smoke box. After the food materials are baked, or in the process of baking the food materials, the smoke generated in the smoke box can be discharged to the cooking cavity to smoke the food materials in the cooking cavity, to increase the flavor of the food materials and enriching the functions of the air fryer, and thus, the air fryer further has a smoking mode while also having conventional cooking modes (such as the air frying mode and the baking mode), and this can satisfy users' various use needs and thus improves the use performance and the market competitiveness of the product.

It can be understood that the food materials will generate oil when placed in the cooking cavity for cooking, the oil flows to the oil receiving tray along the food materials, that is, the oil receiving tray has the function of carrying the oil of the food materials, and decreases or even prevents the oil from flowing to the smoke box from the cooking cavity, and thus can lower the pollution to the smoking materials in the smoke box, and lowers the possibility of generating oily smoke by the oil in a high temperature environment.

The smoking materials are placed in the smoke box, the carbonization of the smoking materials needs a temperature between 260°C and 400°C, and thus the cooking cavity and the smoke box are two relatively independent structures, the oil receiving tray has the function of containing and receiving the oil, and the oil generated by the cooking materials are separated from the smoke box, and this can prevent that the oil enters the smoke box, and then is decomposed and gives off smoke in a high temperature environment, and further affects user experience and the tastes of foods. In addition, as the weight of the smoking materials is relatively low, the oil receiving tray is configured to separate the smoking materials from the cooking cavity, to prevent the circulation air in the cooking cavity from blowing the smoking materials away. The arrangement enriches the functions of the oil receiving tray, and thus the oil receiving tray has both functions of carrying the oil of foods and guiding the smoke to the cooking cavity.

It can be understood that the smoke box communicates with the cooking cavity through the overflowing portion, that is, the smoking materials in the smoke box are carbonized due to high temperature and then give off smoke, the smoke flows to the overflowing portion of the oil receiving tray and flows to the cooking cavity through the overflowing portion. And, the overflowing portion communicates with the smoke box, and the overflowing portion communicates with the cooking cavity.

The above air fryer according to the present disclosure can further comprise the following additional features:

in the above embodiment, furthermore, the oil receiving tray is located between the cooking cavity and the smoke box.

In the embodiment, the relative positions of the oil receiving tray, the cooking cavity and the smoke box are further defined, and the oil receiving tray is located between the cooking cavity and the smoke box, that is, the oil receiving tray separates the cooking cavity from the smoke box, the oil receiving tray has the function of containing and receiving the oil, and the oil generated by the cooking materials is separated from the smoke box, and this can prevent that the oil enters into the smoke box and then is decomposed and gives off smoke in a high temperature environment, and further affects user experience and the tastes of foods. In addition, as the weight of the smoking materials is relatively low, the oil receiving tray is configured to separate the smoking materials from the cooking cavity, to prevent the circulation air in the cooking cavity from blowing the smoking materials away. Meanwhile, the overflowing portion of the oil receiving tray can further satisfy the use need of communicating the smoke box with the cooking cavity. The arrangement reuses the structure of the oil receiving tray, and reduces the device input for guiding the smoke while ensuring the effectiveness and feasibility of carrying the oil of foods and guiding the smoke to the cooking cavity, and helps reduce the production costs of products.

In any of the above embodiments, furthermore, the heating member and the smoke box are located at the same side of the oil receiving tray.

In the embodiment, the cooperating structure of the heating member, the smoke box and the oil receiving tray is further defined, and the heating member and the smoke box are located at the same side of the oil receiving tray, that is, the oil receiving tray separates the cooking cavity from the heating member and the smoke box, the oil receiving tray has the function of containing and receiving the oil, and the oil generated by the cooking materials is separated from the smoke box and the heating member. Thus, the circumstances are prevented that the oil drops to the heating member and then pollutes and damages the heating member, and the oil is decomposed and gives off smoke in a high temperature environment, and this helps improve the safety and reliability of the air fryer in use.

In any of the above embodiments, furthermore, the smoke box is located between the oil receiving tray and the heating member.

In the embodiment, the cooperating structure of the smoke box, the oil receiving tray and the heating member is further defined, and the smoke box is located between the oil receiving tray and the heating member. That is, compared with the heating member, the smoke box is closer to the oil receiving tray. Thus, the heat generated when the heating member works can be concentrated and conducted to the smoke box, and this helps improve the smoke discharging speed of the smoke box.

In any of the above embodiments, furthermore, the heating member is located at the peripheral side of the smoke box.

In the embodiment, the cooperating structure of the smoke box, the oil receiving tray and the heating member is further defined, and the heating member is located at the peripheral side of the smoke box. Thus, the occupation rate of the inner space of the air fryer in the height direction of the air fryer can be reduced while the effectiveness and the feasibility of heating the smoke box by the heating member is ensured.

In any of the above embodiments, furthermore, the machine comprises: a machine body, and the smoke box is provided in the machine body; a carrier, provided in the machine body, and the carrier is provided with the cooking cavity and the oil receiving tray; and the air fryer further comprises a hot air apparatus for supplying hot air to the cooking cavity.

In the embodiment, the structure of the air fryer is further defined, the machine comprises the machine body and the carrier, and the air fryer further comprises the hot air apparatus.

The carrier is provided with the cooking cavity and the oil receiving tray, and the food materials are placed in the cooking cavity of the carrier. That is, the carrier has both functions of carrying the food materials and carrying the oil of the food materials.

The hot air apparatus communicates with the cooking cavity, the hot air apparatus works and then can heat the air, to form the hot air, the hot air circulates and flows in the cooking cavity under the effect of the fan of the hot air apparatus to heat the food materials.

In any of the above embodiments, furthermore, the carrier comprises: a frying tray, and the inner surface of the frying tray encloses the cooking cavity; and a frying barrel, connected to the outer surface of the frying tray, and at least a portion of the frying barrel forms the oil receiving tray.

In the embodiment, the structure of the carrier is further defined, the carrier comprises the frying tray and the frying barrel, the frying barrel is connected to the outer surface of the frying tray, that is, the frying barrel is located at the outer side of the frying tray. In addition, the inner surface of the frying tray encloses the cooking cavity. That is, the cooking cavity has a double-layered wall surface structure formed by a double-layered housing. It can be understood that at least a portion of the frying barrel forms the oil receiving tray, the oil generated by cooking the food materials in the frying tray can be contained and received by the frying barrel, and the smoke can further flow to the cooking cavity of the frying tray through the frying barrel.

In any of the above embodiments, furthermore, an overflowing cavity is enclosed by the outer surface of the frying tray and inner surface of the frying barrel, and the overflowing cavity communicates with the overflowing portion.

In the embodiment, the structure of the carrier is further defined, the overflowing cavity is enclosed by the outer surface of the frying tray and inner surface of the frying barrel, and the overflowing cavity communicates with the overflowing portion. That is, the smoke generated in the working process of the smoke box flows to the overflowing cavity through the overflowing portion, and then flows to the cooking cavity through the overflowing cavity.

The overflowing cavity has a larger volume than the overflowing portion, and this helps increase the contact area between the smoke and the cooking cavity, and further helps improve the balance and the consistency of smoking the food materials at different positions inside the cooking cavity, and helps improve the smoking tastes of the food materials.

In any of the above embodiments, furthermore, the frying tray is provided with a baffle and a first overflowing port, the first overflowing port is located at the peripheral side of the baffle, and the overflowing portion is disposed corresponding to the baffle.

In the embodiment, the structure of the frying tray is further defined, the frying tray is provided with the baffle and the first overflowing port, the overflowing portion is disposed corresponding to the baffle, and the first overflowing port is located at the peripheral side of the baffle.

The baffle, the first overflowing port and the overflowing portion cooperate with each other to change the flowing path of the smoke.

In an embodiment, the smoke generated in the smoke box flows to the baffle through the overflowing portion, the baffle can block the smoke from flowing along the current direction, the smoke will make a turn and flows to the first overflowing port at the peripheral side of the baffle along the baffle, and flows to the cooking cavity through the first overflowing port.

In addition, when the food materials are cooked, the food materials can generate the oil, the oil flows to the first overflowing port along the food materials, and flows to the oil receiving tray through the first overflowing port, that is, the oil receiving tray has the function of carrying the oil of the food materials. Since the baffle is disposed corresponding to the overflowing portion, the baffle has the function of blocking the oil from flowing to the overflowing portion, to prevent the occurrence of the circumstance that the oil enters the smoke box through the overflowing portion. If the oil flows to the smoke box through the overflowing portion, the oil will generate oily smoke in a high temperature environment, and this will affect the tastes of the food materials and cause pollution to the environment.

It can be understood that the baffle is disposed corresponding to the overflowing portion, and thus, even if the oil flows to the baffle, the baffle will change the flowing path of the oil, the oil will flow to the first overflowing port away from the overflowing portion under the guiding of the baffle and will be received in the oil receiving tray. That is, the oil will not flow to the smoke box through the overflowing portion.

That is, the first overflowing port has both functions of allowing the smoke to enter the cooking cavity and allowing the oil to flow to the oil receiving tray.

In any of the above embodiments, furthermore, a portion of the oil receiving tray protrudes towards the direction of the cooking cavity to form a protruding structure, the protruding structure is provided with the overflowing portion, and the portion of the oil receiving tray located at the peripheral side of the protruding structure is disposed corresponding to the first overflowing port.

In the embodiment, the structure of the oil receiving tray is further defined, and a portion of the oil receiving tray protrudes towards the direction of the cooking cavity to form the protruding structure, and the protruding structure is provided with the overflowing portion, i.e., the protruding structure serves as the mounting carrier of the overflowing portion.

Since the portion of the oil receiving tray located at the peripheral side of the protruding structure is disposed corresponding to the first overflowing port, the overflowing portion should be higher than the portion of the oil receiving tray located at the peripheral side of the protruding structure, that is, only when the accumulated oil is higher than the position of the overflowing portion, the oilcan flow to the overflowing portion. In other words, the arrangement can prevent the occurrence of the circumstance that the oil flows to the smoke box through the overflowing portion, and prevent polluting the smoking materials in the smoke box, and can prevent the generation of the oily smoke.

It can be understood that the protruding structure is provided with the overflowing portion, the portion of the oil receiving tray located at the peripheral side of the protruding structure is disposed corresponding to the first overflowing port, that is, the height of the region of the oil receiving tray used for containing and receiving the oil is smaller than the height of the overflowing portion.

In addition, the overflowing cavity is enclosed by the outer surface of the frying tray and the inner surface of the frying barrel, and thus, the smoke generated in the smoke box flows to the overflowing cavity through the overflowing portion, and flows to the first overflowing port located at the peripheral side of the baffle through the overflowing cavity, to flow to the top of the food materials from the bottom of the food materials through the first overflowing port and then thoroughly smoke the food materials, and thus, different positions of the food materials can be effectively smoked, and the balance and the consistency of the smoking effect can be ensured and the tastes of the food materials can be ensured.

In any of the above embodiments, furthermore, at least one of the machine body and the carrier is provided with a smoke flow channel, and the smoke flow channel communicates the overflowing portion with the smoke box.

In the embodiment, the structures of the machine body and the carrier are further defined, and at least one of the machine body and the carrier is provided with the smoke flow channel, i.e., the machine body is provided with the smoke flow channel, or the carrier is provided with the smoke flow channel, or both of the machine body and the carrier are provided with the smoke flow channel. The smoke flow channel communicates with the overflowing portion, and the smoke flow channel communicates with the smoke box, i.e., the smoke flow channel communicates the overflowing portion with the smoke box. The smoke generated in the smoke box flows to the smoke flow channel, and flows to the overflowing portion through the smoke flow channel, and then flows to the cooking cavity through the overflowing portion.

When the machine body is provided with the smoke flow channel, the machine body is used as the mounting carrier of the smoke flow channel, has the functions of mounting and fixing the smoke flow channel, and can ensure the cooperating dimensions of the smoke flow channel, the overflowing portion and the smoke box.

When the carrier is provided with the smoke flow channel, the carrier is used as the mounting carrier of the smoke flow channel, has the functions of mounting and fixing the smoke flow channel, and can ensure the cooperating dimensions of the smoke flow channel, the overflowing portion and the smoke box.

In any of the above embodiments, furthermore, the number of the smoke flow channel is multiple, and the plurality of smoke flow channels are arranged at intervals along the circumferential direction of the cooking cavity.

In the embodiment, the number of the smoke flow channels is multiple, the cooperating structure of the plurality of smoke flow channels and the cooking cavity is that the plurality of smoke flow channels are arranged at intervals along the circumferential direction of the cooking cavity, and this arrangement helps the smoke flow to the cooking cavity at the same time from multiple directions and multiple angles through the plurality of smoke flow channels to smoke the food materials thoroughly, and ensures that the food materials at different positions can all contact the smoke thoroughly to ensure the balance and the consistency of the smoked food materials, and can ensure the tastes of the cooked food materials.

In any of the above embodiments, furthermore, the air fryer further comprises a filter, provided in the smoke flow channel.

In the embodiment, the structure of the air fryer is further defined, and the air fryer further comprises the filter, the filter is provided in the smoke flow channel, the filter has a function of filtering sundries, and prevents the sundries and the like from dropping into the smoke box through the smoke flow channel, and thus can ensure the effectiveness of generating the smoke by the smoke box. If the sundries drop into the smoke box, the sundries will be decomposed and give off smoke under the effect of the high temperature, and this will affect user experience and the tastes of foods.

Meanwhile, when the machine body is provided with the smoke flow channel, the filter is disposed and the filter is located between the overflowing portion and the smoke box, the filter can prevent the occurrence of the circumstance that users touch the high-temperature smoke box and the heating member by mistake, and thus the safety and reliability of the air fryer in use can be improved.

In any of the above embodiments, furthermore, the machine body is provided with a sealing member, the sealing member abuts the outer surface of the carrier, and the sealing member is disposed surrounding the overflowing portion.

In the embodiment, through reasonably configuring the structure of the machine body, the machine body is provided with the sealing member, the sealing member abuts the outer surface of the carrier, the sealing member is configured to seal the connection portion between the machine body and the carrier, and this prevents the occurrence of the circumstance that the smoke escapes from the connection portion between the machine body and the carrier, and the smoke is directly guided to the overflowing portion.

In addition, the sealing member is disposed surrounding the overflowing portion, and thus can seal the connection portion between the machine body and the carrier from multiple directions and multiple angles, and can ensure the sealing performance of the smoke flow channel.

In any of the above embodiments, furthermore, the machine body is further provided with a first passage and a first outlet, and the first passage communicates the cooking cavity with the first outlet.

In the embodiment, the structure of the machine body is further defined, and the machine body is further provided with the first passage and the first outlet, the first passage communicates with the first outlet, and the first passage communicates with the cooking cavity, and thus, the smoke in the cooking cavity can flow to the first passage, and is discharged out of the air fryer through the first outlet. That is, the first passage has the function of discharging the smoke. The use need of the air fryer can be satisfied.

In any of the above embodiments, furthermore, the hot air apparatus comprises a motor, the machine body is further provided with a second passage and a second outlet, at least a portion of the motor is located in the second passage, the second passage and the first passage are arranged at an interval, and the second passage communicates with the second outlet.

In the embodiment, the structure of the machine body is further defined, and the machine body is further provided with the second passage and the second outlet, and the second passage communicates with the second outlet.

And, the hot air apparatus comprises the motor, at least a portion of the motor is located in the second passage, the airstream in the second passage will be discharged out of the air fryer through the second outlet, the flowing of the airstream will take the heat generated when the motor works, to achieve the function of cooling the motor and dissipating heat for the motor. That is, the second passage has the function of heat dissipation.

In addition, the second passage and the first passage are arranged at an interval, that is, the first passage and the second passage are two relatively independent passages, the airstream in the first passage will not flow to the second passage, and the airstream in the second passage will not flow to the first passage. The arrangement can prevent the occurrence of the circumstance that the smoke in the first passage flows back to the second passage, and meanwhile can prevent the hot air in the second passage from flowing back to the first passage.

In any of the above embodiments, furthermore, the air fryer further comprises: a circuit board, provided in the second passage, and the circuit board is electrically connected to the hot air apparatus.

In an example, the structure of the air fryer is further defined, the air fryer further comprises a circuit board, the circuit board is provided in the second passage, and the circuit board is electrically connected to the hot air apparatus, the circuit board has the function of controlling the working of the hot air apparatus. The circuit board generates heat when it works, the circuit board is placed in the second passage, the airstream in the second passage will be discharged out of the air fryer through the second outlet, the flowing of the airstream will take the heat generated when the circuit board works, and thus the function of cooling the circuit board and dissipating heat for the circuit board is achieved.

It can be understood that electronic members are provided on the circuit board.

In any of the above examples, furthermore, the hot air apparatus further comprises: a drive shaft, connected to the motor, and the drive shaft passes through the second passage and extends into the first passage; a first fan blade, located in the first passage, and the first fan blade is connected to the drive shaft; a second fan blade, located in the second passage, and the second fan blade is connected to the drive shaft; and a heat generating member, provided in the first passage.

In the example, the hot air apparatus further comprises the drive shaft, the first fan blade, the second fan blade and the heat generating member.

The drive shaft is connected to the motor, the drive shaft passes through the second passage and extends into the first passage, and the drive shaft is connected to the first fan blade. The motor works and thus can drive the drive shaft to rotate, the rotating of the drive shaft can drive the first fan blade to rotate, and the rotating of the first fan blade can drive the hot air to circulate between the cooking cavity and the first passage.

The drive shaft is connected to the motor, and the drive shaft is further connected to the second fan blade which is located in the second passage. The motor works and thus can drive the drive shaft to rotate, the rotating of the drive shaft can drive the second fan blade to rotate, and the rotating of the second fan blade can drive the airstream in the second passage to flow to the second outlet, to meet the use need of dissipating heat for the motor, and thus, the temperature rise of the motor can be lowered, and this helps extend the service life of the motor.

It can be understood that an air inlet is further provided in the machine body, and the air inlet communicates with the second passage.

It can be understood that the heat generating member works to heat the airstream in the first passage, and the hot air is generated therein. And, the heat generating member comprises a heat generating tube, a heat generating sheet, a heat generating plate, etc., which will not be listed herein.

In addition, both the first fan blade and the second fan blade are connected to the drive shaft, that is, the motor can drive the first fan blade and the second fan blade to work at the same time, and thus, the use need on the working of the first fan blade and the second fan blade is ensured and the device input for driving the first fan blade and the second fan blade to work is further reduced, and thus the production cost of the air fryer is reduced.

In any of the above embodiments, furthermore, the machine body comprises: a housing, and the housing is provided with the first outlet, the second outlet, the first passage and the second passage, the first passage communicates the cooking cavity with the first outlet, and the second passage communicates with the second outlet; a partition plate, provided in the housing, and the partition plate comprises a first end surface and a second end surface which are disposed opposite to each other in the height direction of the machine body, the first end surface forms a portion of the wall surface of the first passage, the second end surface forms a portion of the wall surface of the second passage, and the partition plate is located between the first outlet and the second outlet; and the hot air apparatus comprises the motor, and at least a portion of the motor is located in the second passage.

In the embodiment, the structure of the machine body is further detailed, the machine body comprises the housing and the partition plate, and the partition plate is provided in the housing.

The partition plate comprises the first end surface and the second end surface, the first end surface and second end surface are arranged at an interval and opposite to each other in the height direction of the machine body. The first end surface forms a portion of the wall surface of the first passage, the second end surface forms a portion of the wall surface of the second passage. That is, the first passage and the second passage are located at the two opposite sides of the partition plate.

Since the partition plate is located between the first outlet and the second outlet, that is, the partition plate has the function of partitioning the first outlet from the second outlet, and this can effectively prevent the airstream discharged out of the first outlet from flowing into the second outlet, and can further effectively prevent the airstream discharged out of the second outlet from flowing into the first outlet. This arrangement can prevent the occurrence of the circumstance that the smoke in the first passage flows back to the second passage, and can further prevent the hot air in the second passage from flowing back to the first passage.

In any of the above embodiments, furthermore, the machine body comprises a cavity with a first opening, and the carrier can be detachably provided in the cavity through the first opening.

In the embodiment, the cooperating structure of the machine body and the carrier is further defined, the machine body comprises the cavity with the first opening, the carrier is detachably provided in the cavity through the first opening, that is, the carrier can be inserted into the cavity through the first opening in the machine body to seal the cavity, and the carrier can further be separated from the machine body through the first opening in the machine body to open the cavity.

Since the carrier is provided with the cooking cavity and the oil receiving tray, the cooking cavity and the oil receiving tray are further separated from the machine body when the carrier is separated from the machine body.

In any of the above examples, furthermore, a smoke cavity is enclosed by the carrier and the wall of the cavity, and the smoke box is detachably connected to the smoke cavity.

In the example, the smoke cavity is enclosed by the carrier and the wall of the cavity, i.e., when the carrier is inserted into the cavity through the first opening, the smoke cavity for accommodating the smoke box is enclosed between the carrier and the wall of the cavity. The smoke cavity has the function of mounting and fixing the smoke box.

It can be understood that the smoke cavity is partitioned from the cavity by the carrier, when the carrier is separated from the machine body through the first opening in the machine body, the smoke box is completely exposed in the cavity, and at the point, users can disassemble and assemble the smoke box through the first opening, and can further put smoking materials in the smoke box through the first opening.

The smoke box is detachably connected to the smoke cavity, i.e., the disassembling and assembling of the smoke box and the mounting position of the smoke box with respect to the smoke cavity can be determined according to actual circumstances, and this can adapt to the use needs on the air fryers of different models, and thus achieves strong product adaptability and improves the service performance of the product. In addition, the smoke box is detachably connected to the smoke cavity, and this helps wash and clean the smoke box, and can ensure the sanitation and safety of the air fryer in use.

In an example, when the smoking mode of the air fryer is used, the carrier can be separated from the machine body through the first opening in the machine body, the smoking materials are put into the smoke box, and then, the carrier is inserted into the cavity through the first opening in the machine body.

In an example, when the smoke box is cleaned, the carrier can be separated from the machine body through the first opening in the machine body, then the smoke box is taken out to clean the smoke box.

In an example, when the food materials do not need to be smoked, the smoke box can be taken out of the machine body, to directly cook the food materials in the cooking cavity and further achieve conventional cooking operations such air-frying and baking. The arrangement can satisfy diversified use needs, the functions of the product are enriched, the purpose of achieving multiple cooking functions can be achieved, and the use performance and the market competitiveness of the product are improved.

In an example, the connection method between the smoke box and the machine body comprises, but is not limited to, snapping, screwing, magnetic attaching and fastening connection through a fastener (in some embodiments, a screw, a bolt or a rivet).

In any of the above examples, furthermore, the machine body is further provided with a second opening, and the smoke box is inserted into the smoke cavity through the second opening.

In the example, the structure of the machine body is further defined, and the machine body is further provided with the second opening, the second opening communicates with the smoke cavity, the smoke box can be inserted into the smoke cavity through the second opening, and the smoke box can further be drawn out from the smoke cavity through the second opening.

The smoke box can be separated from the smoke cavity through the second opening to clean the smoke box or put smoking materials in the smoke box.

In any of the above examples, furthermore, the smoke box is provided with an accommodating groove, and the accommodating groove communicates with the overflowing portion.

In the example, the structure of the smoke box is further defined, the smoke box is provided with the accommodating groove, the smoking materials can be put into the accommodating groove, and can further be taken out of the accommodating groove.

The accommodating groove communicates with the overflowing portion, and the smoke flows to the overflowing portion through the notch of the accommodating groove.

In any of the above examples, furthermore, the air fryer further comprises a smoke cover, the smoke cover is detachably connected to the smoke box, the smoke cover is provided with a through hole, and the accommodating groove communicates with the overflowing portion via the through hole.

In the example, the structure of the air fryer is further defined, and the air fryer further comprises the smoke cover, and the smoke cover is detachably connected to the smoke box, i.e., the assembling and disassembling of the smoke cover and the smoke box and the mounting position of the smoke cover with respect to the smoke box can be determined according to actual circumstances, and this can further meet the use needs on the air fryers of different models, and achieves strong product adaptability and improves the service performance of the product.

In addition, the smoke cover is provided with the through hole, the through hole communicates with the accommodating groove, and the through hole communicates with the overflowing portion, i.e., the accommodating groove communicates with the overflowing portion via the through hole. The smoke in the accommodating groove flows out of the smoke box via the through hole, and then flows to the overflowing portion.

The smoke cover is arranged covering the smoke box, and thus the smoke cover can prevent the scattering of the particles of the smoking materials in the smoke box, and the smoke box cooperates with the smoke cover to limit the smoking materials, to prevent the overflow of the smoking materials.

In any of the above examples, furthermore, the machine is further provided with an entrance, the smoke box is provided with meshes, and the meshes communicate the entrance with the accommodating groove.

In the example, the cooperating structure of the machine and the smoke box is further defined. The machine is further provided with the entrance. The smoke box is provided with meshes. The entrance communicates with the meshes of the smoke box, the meshes communicate with the accommodating groove, and the accommodating groove communicates with the overflowing portion.

It can be understood that the gas in the environment can flow into the meshes through the entrance, and then flow to the overflowing component after going through the smoking materials. The gas flows through the smoke box and can contact the smoking materials thoroughly, and this helps the burning of the smoking materials and can burn the smoking materials thoroughly, and the smoke materials are burned completely. This helps improve the smoking efficiency of the smoking materials.

It can be understood that the entrance, the meshes and the accommodating groove form an air passage, and the smoking materials can contact the air thoroughly.

In an example, the portion of the machine body located at the entrance and the smoke box is a flame retardant part, and this can reduce the probability of the occurrence of the burning of the machine body at high temperature and helps improve the safety and reliability of the air fryer in use.

It can be understood that the notch of the accommodating groove forms a second overflowing port, and the second overflowing port communicates with the overflowing portion.

In any of the above examples, furthermore, the entrance is located at the side of the smoke box away from the overflowing portion.

In the example, the arrangement position of the entrance is further defined, and the entrance is located at the side of the smoke box away from the overflowing portion, and this arrangement makes the air flow to the overflowing portion from the side of the smoke box away from the overflowing portion, and extends the flowing path of the air in the accommodating groove, and thus makes the smoking materials contact the air thoroughly, and helps improve the burning rate of the smoking materials.

In any of the above examples, furthermore, grid placing boards are provided in the accommodating groove, the grid placing boards and the meshes are arranged at intervals, and the aperture of the grid placing boards is greater than the aperture of the meshes.

In the example, through reasonably configuring the structure of the smoke box, the grid placing boards are provided in the accommodating groove, and the smoking materials are placed on the grid placing boards. When the air fryer works, gas can flow to the bottom of the smoking materials through the grid placing boards, and then flow to the top of the smoking materials, to thoroughly heat the smoking materials. This helps burn the smoking materials thoroughly.

And, the grid placing boards and the meshes are arranged at intervals, i.e., there are gaps between the grid placing boards and the meshes, and this helps the gas flow to the smoking materials at different positions on the grid placing boards, and helps burn the smoking materials, and thus the smoking materials can be heated thoroughly.

In addition, after burning, the smoking materials will form ashes with smaller grain sizes. The aperture of the grid placing boards is arranged to be greater than the aperture of the meshes, the meshes have the function of carrying the ashes, to lower the occurrence of the circumstance that the ashes drop out of the air fryer through the entrance.

In any of the above embodiments, furthermore, the heating member is further configured to supply heat to the cooking cavity.

In the embodiment, the heating member is further configured to supply heat to the cooking cavity, i.e., the heating member can work for the cooking cavity and the smoke box, and the heating member has the function of assisting heating the cooking cavity. The arrangement enriches the functions of the heating member.

THE ADDITIONAL ASPECTS AND ADVANTAGES OF THE PRESENT DISCLOSURE WILL BE OBVIOUS IN THE FOLLOWING DESCRIPTION, OR CAN BE UNDERSTOOD THROUGH THE IMPLEMENTATION OF THE PRESENT DISCLOSURE.

### BRIEF DESCRIPTION OF THE DRAWINGS

The above and/or additional aspects and advantages of the present disclosure will be obvious and understood easily from the following description of the embodiments in combination with the accompanying drawings. The examples do not fall under the scope of the claims. And,
Fig. 1 shows a schematic view of the structure of an air fryer according to Embodiment 1 of the present disclosure;
Fig. 2 shows a schematic view of a portion of the structure of the air fryer according to Embodiment 1 of the present disclosure;
Fig. 3 shows a schematic view of the structure of the flowing direction of the smoke in the air fryer according to Embodiment 1 of the present disclosure;
Fig. 4 shows a schematic view of a portion of the structure of an air fryer according to Embodiment 2 of the present disclosure;
Fig. 5 shows a schematic view of the structure of an air fryer according to Embodiment 3 of the present disclosure;
Fig. 6 shows an exploded view of the air fryer according to Embodiment 3 of the present disclosure;
Fig. 7 shows a schematic view of the structure of a carrier according to an embodiment of the present disclosure;
Fig. 8 shows a schematic view of a portion of the structure of an air fryer according to Embodiment 4 of the present disclosure;
Fig. 9 shows a first exploded view of an air fryer according to Embodiment 5 of the present disclosure;
Fig. 10 shows a second exploded view of the air fryer according to Embodiment 5 of the present disclosure;
Fig. 11 shows a schematic view of a portion of the structure of the air fryer according to Embodiment 5 of the present disclosure;
Fig. 12 shows a schematic view of a portion of the structure of an air fryer according to Embodiment 6 of the present disclosure;
Fig. 13 shows a schematic view of a portion of the structure of an air fryer according to Embodiment 7 of the present disclosure;
Fig. 14 shows a schematic view of a portion of the structure of an air fryer according to Embodiment 8 of the present disclosure;
Fig. 15 shows a schematic view of the structure of a smoke box according to an example of the present disclosure;
Fig. 16 shows a schematic view of a portion of the structure of the air fryer according to an example of the present disclosure;
Fig. 17 shows a schematic view of a portion of the structure of the air fryer according to an example of the present disclosure;
Fig. 18 shows a schematic view of a portion of the structure of the air fryer according to an example of the present disclosure;
Fig. 19 shows a schematic view of a portion of the structure of the air fryer according to an example of the present disclosure; and
Fig. 20 shows a schematic view of the structure of a smoke box according to an example of the present disclosure.

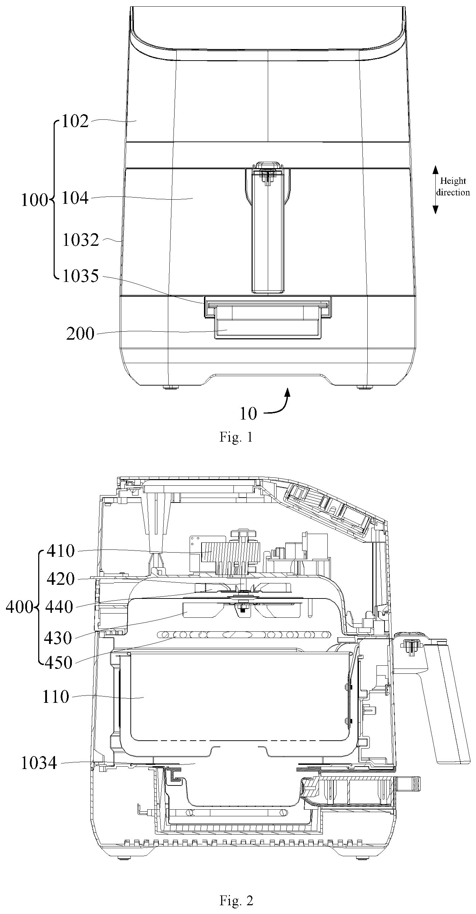

And, the corresponding relationships between the reference signs and the component names in Fig. 1 to Fig. 20 are as follows:

10: air fryer, 100: machine, 102: machine body, 1022: first passage, 1024: first outlet, 1026: second passage, 1028: second outlet, 1030: housing, 1031:partition plate, 1032: first opening, 1033: cavity, 1034: smoke cavity, 1035: second opening, 104: carrier, 1042: frying tray, 1044: frying barrel, 1046: overflowing cavity, 1048: baffle, 1050: first overflowing port, 106: smoke flow channel, 110: cooking cavity, 112: barrier wall, 114: overflowing wall, 120: oil receiving tray, 122: overflowing portion, 124: protruding structure, 130: entrance, 140: guiding device, 142: slideway, 144: avoidance port, 200: smoke box, 210: mesh, 220: second overflowing port, 230: grid placing board, 240: accommodating groove, 250: handle, 260: heat-insulating plate, 300: heating member, 400: hot air apparatus, 410: motor, 420: drive shaft, 430: first fan blade, 440: second fan blade, 450: heat generating member, 500: filter, 600: sealing member, 800: smoke cover, 810: through hole, 820: stiffening rib, 830: vented zone, 900: protruding portion, 1000: inner bottom wall of the frying barrel, 1100: inner side wall of the frying barrel, 1200: plate body, 1300: third overflowing port, and 1500: enclosing panel.

### DETAILED DESCRIPTION OF THE DISCLOSURE

In order to understand the above-mentioned objectives, features and advantages of the present disclosure more clearly, a further detailed description of the present disclosure will be given below in combination with the accompanying drawings and specific embodiments. It should be noted that the embodiments of the present disclosure and the features in the embodiments can be combined with each other if there is no conflict.

In the following description, numerous specific details are set forth in order to provide a thorough understanding of the present disclosure. However, the present disclosure can further be implemented in other manners than those described herein. Therefore, the protection scope of the embodiments of the present disclosure is not limited to the specific embodiments disclosed below. The scope of protection is defined by the appended claims.

An air fryer 10 proposed by some embodiments of the present disclosure is described below with reference to Fig. 1 to Fig. 20.

As shown in Fig. 1, Fig. 2, Fig. 3, Fig. 4, Fig. 5, Fig. 6, Fig. 7, Fig. 8, Fig. 9, Fig. 10, Fig. 11, Fig. 12, Fig. 13 and Fig. 14, the air fryer 10 according to some embodiments of the present disclosure comprises a machine 100, a smoke box 200 and a heating member 300.

The machine 100 is provided with a cooking cavity 110 and an oil receiving tray 120.

The oil receiving tray 120 is located at one side of the cooking cavity 110.

The oil receiving tray 120 is provided with an overflowing portion 122.

A smoke box 200 is provided in the machine 100, and the smoke box 200 communicates with the cooking cavity 110 through the overflowing portion 122.

A heating member 300 is provided in the machine 100, and the heating member 300 is at least configured to supply heat to the smoke box 200.

In the embodiment, the air fryer 10 comprises the machine 100, the smoke box 200 and the heating member 300.

The machine 100 is provided with the cooking cavity 110 and the oil receiving tray 120, the oil receiving tray 120 is provided with the overflowing portion 122, and the smoke box 200 communicates with the cooking cavity 110 through the overflowing portion 122.

In an embodiment, food materials are placed in the cooking cavity 110 and cooked in the cooking cavity 110, to meet use needs such as air-frying, heating and baking food materials.

And, the smoke box 200 communicates with the cooking cavity 110 through the overflowing portion 122 of the oil receiving tray 120, the heating member 300 heats the smoke box 200, the smoking materials in the smoke box 200 are carbonized due to high temperature and give off smoke, and the smoke can flow to the cooking cavity 110 to smoke the food materials.

In an embodiment, the food materials are placed in the cooking cavity 110. The smoking materials (in some embodiments, wood chips) are placed in the smoke box 200. After the food materials are baked, or in the process of baking the food materials, the smoke generated in the smoke box 200 can be discharged to the cooking cavity 110 to smoke the food materials in the cooking cavity 110, to increase the flavor of the food materials and enriching the functions of the air fryer 10, and thus, the air fryer 10 further has a smoking mode while also having conventional cooking modes (such as the air frying mode and the baking mode), and this can satisfy users' diversified use needs and thus improves the use performance and the market competitiveness of the product.

It can be understood that the food materials will generate oil when placed in the cooking cavity 110 for cooking, the oil flows to the oil receiving tray 120 along the food materials, that is, the oil receiving tray 120 has the function of carrying the oil of the food materials, and decreases or even prevents the oil from flowing to the smoke box 200 from the cooking cavity 110, and thus can lower the pollution to the smoking materials in the smoke box 200, and lowers the possibility of generating oily smoke by the oil in a high temperature environment.

The smoking materials are placed in the smoke box 200, the carbonization of the smoking materials needs a temperature between 260°C and 400°C, and thus the cooking cavity 110 and the smoke box 200 are two relatively independent structures, the oil receiving tray120has the function of containing and receiving the oil, and the oil generated by the cooking materials are separated from the smoke box 200, and this can prevent that the oil enters the smoke box 200, and then is decomposed and gives off smoke in a high temperature environment, and further affects user experience and the tastes of foods. In addition, as the weight of the smoking materials is relatively low, the oil receiving tray 120 is configured to separate the smoking materials from the cooking cavity 110, to prevent the circulation air in the cooking cavity 110 from blowing the smoking materials away. The arrangement enriches the functions of the oil receiving tray 120, and thus the oil receiving tray 120 has both functions of carrying the oil of foods and guiding the smoke to the cooking cavity 110.

It can be understood that the smoke box 200 communicates with the cooking cavity 110 through the overflowing portion 122, that is, the smoking materials in the smoke box 200 is carbonized due to high temperature and then gives off smoke, the smoke flows to the overflowing portion 122 of the oil receiving tray 120 and flows to the cooking cavity 110 through the overflowing portion 122. And, the overflowing portion 122 communicates with the smoke box 200, and the overflowing portion 122 communicates with the cooking cavity 110.

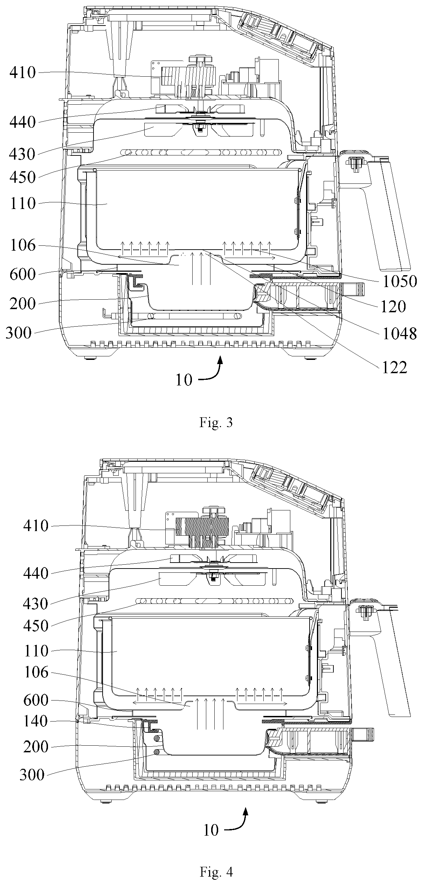

In some embodiments, as shown in Fig. 3, the oil receiving tray 120 is located between the cooking cavity 110 and the smoke box 200.

In the embodiment, the position relations of the oil receiving tray 120, the cooking cavity 110 and the smoke box 200 are further defined, and the oil receiving tray 120 is located between the cooking cavity 110 and the smoke box 200, that is, the oil receiving tray 120 separates the cooking cavity 110 from the smoke box 200, the oil receiving tray 120 has the function of containing and receiving the oil, and the oil generated by the cooking materials are separated from the smoke box 200, and this can prevent that the oil enters into the smoke box 200 and then is decomposed and gives off smoke in a high temperature environment, and further affects user experience and the tastes of foods. In addition, as the weight of the smoking materials is relatively low, the oil receiving tray 120 is configured to separate the smoking materials from the cooking cavity 110, to prevent the circulation air in the cooking cavity 110 from blowing the smoking materials away. Meanwhile, the overflowing portion 122 of the oil receiving tray 120 can further satisfy the use need of communicating the smoke box 200 with the cooking cavity 110. The arrangement reuses the structure of the oil receiving tray 120, and reduces the device input for guiding the smoke while ensuring the effectiveness and feasibility of carrying the oil of foods and guiding the smoke to the cooking cavity 110, and helps reduce the production costs of products.

In some embodiments, as shown in Fig. 3, the heating member 300 and the smoke box 200 are located at the same side of the oil receiving tray 120.

In the embodiment, the cooperating structure of the heating member 300, the smoke box 200 and the oil receiving tray 120 is further defined, and the heating member300 and the smoke box 200 are located at the same side of the oil receiving tray 120, that is, the oil receiving tray 120 separates the cooking cavity 110 from the heating member 300 and the smoke box 200, the oil receiving tray 120 has the function of containing and receiving the oil, and the oil generated by the cooking materials are separated from the smoke box 200 and the heating member 300. Thus, the circumstances are prevented that the oil drops to the heating member 300 and then pollutes and damages the heating member 300, and the oil is decomposed and gives off smoke in a high temperature environment, and this helps improve the safety and reliability of the air fryer 10 in use.

In some embodiments, as shown in Fig. 3, the smoke box 200 is located between the oil receiving tray 120 and the heating member 300.

In the embodiment, the cooperating structure of the smoke box 200, the oil receiving tray 120 and the heating member 300 is further defined, and the smoke box 200 is located between the oil receiving tray 120 and the heating member 300. That is, compared with the heating member 300, the smoke box 200 is closer to the oil receiving tray 120. Thus, the heat generated when the heating member 300 works can be concentrated and conducted to the smoke box 200, and this helps improve the smoke discharging speed of the smoke box 200.

In some embodiments, as shown in Fig. 4, the heating member 300 is located at the peripheral side of the smoke box 200.

In the embodiment, the cooperating structure of the smoke box 200, the oil receiving tray 120 and the heating member 300 is further defined, and the heating member 300 is located at the peripheral side of the smoke box 200. Thus, the occupation rate of the inner space of the air fryer 10 in the height direction of the air fryer 10 can be reduced while the effectiveness and the feasibility of heating the smoke box 200 by the heating member 300 is ensured.

In an example, the heating member 300 is disposed surrounding the smoke box 200. In some embodiments, the heating member 300 is a helical structure, for another example, the heating member 300 is a ring structure, and for another example, the heating member 300 is a non-closed curve structure.

In an example, the number of the heating member 300 is multiple, and the plurality of heating members 300 are arranged at intervals along the circumferential direction of the smoke box 200.

In some embodiments, as shown in Fig. 1, Fig. 2, Fig. 5, Fig. 6, Fig. 10 and Fig. 14, the machine 100 comprises the machine body 102 and the carrier 104, and the air fryer 10 further comprises a hot air apparatus 400.

The smoke box 200 is provided in the machine body 102.

The carrier 104 is provided in the machine body 102, and the carrier 104 is provided with the cooking cavity 110 and the oil receiving tray 120.

The hot air apparatus 400 is configured to supply hot air to the cooking cavity 110.

In the embodiment, the structure of the air fryer 10 is further defined, the machine 100 comprises the machine body 102 and the carrier 104, and the air fryer 10 further comprises the hot air apparatus 400.

The carrier 104 is provided with the cooking cavity 110 and the oil receiving tray 120, and the food materials are placed in the cooking cavity 110 of the carrier 104. That is, the carrier 104 has both functions of carrying the food materials and carrying the oil of the food materials.

The hot air apparatus 400 communicates with the cooking cavity 110, the hot air apparatus 400 works and then can heat the air, to form the hot air, the hot air circulates and flows in the cooking cavity 110 under the effect of the fan of the hot air apparatus 400 to heat the food materials.

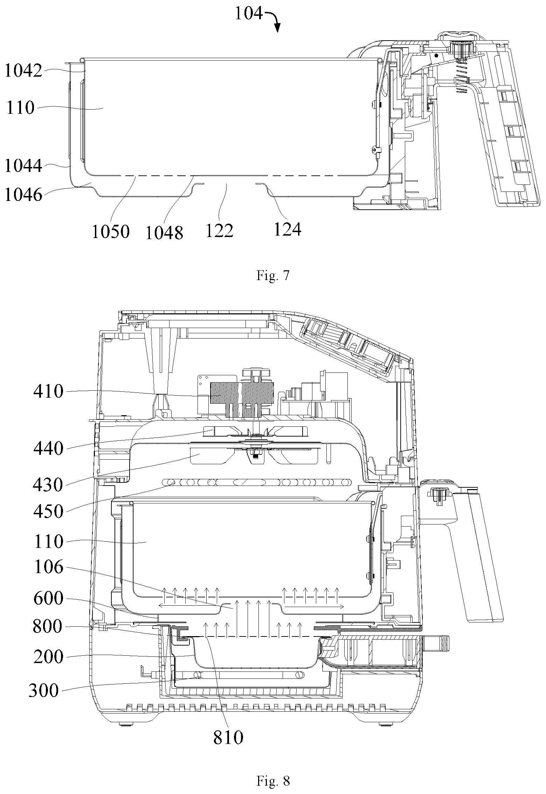

In some embodiments, as shown in Fig. 7, the carrier 104 comprises a frying tray 1042 and a frying barrel 1044.

The inner surface of the frying tray 1042 encloses the cooking cavity 110.

The frying barrel 1044 is connected to the outer surface of the frying tray 1042, and at least a portion of the frying barrel 1044 forms the oil receiving tray 120.

In the embodiment, the structure of the carrier 104 is further defined, the carrier 104 comprises the frying tray 1042 and the frying barrel 1044, the frying barrel 1044is connected to the outer surface of the frying tray 1042, that is, the frying barrel 1044 is located at the outer side of the frying tray 1042. In addition, the inner surface of the frying tray 1042 encloses the cooking cavity 110. That is, the cooking cavity 110 has a double-layered wall surface structure formed by a double-layered housing.

It can be understood that at least a portion of the frying barrel 1044 forms the oil receiving tray 120, the oil generated by cooking the food materials in the frying tray 1042 can be contained and received by the frying barrel 1044, and the smoke can further flow to the cooking cavity 110 of the frying tray 1042 through the frying barrel 1044.

In some embodiments, as shown in Fig. 7, an overflowing cavity 1046 is enclosed by the outer surface of the frying tray 1042 and inner surface of the frying barrel 1044, and the overflowing cavity 1046 communicates with the overflowing portion 122.

In the embodiment, the structure of the carrier 104 is further defined, the overflowing cavity 1046 is enclosed by the outer surface of the frying tray 1042 and inner surface of the frying barrel 1044, and the overflowing cavity 1046 communicates with the overflowing portion 122. That is, the smoke generated in the working process of the smoke box 200 flows to the overflowing cavity 1046 through the overflowing portion 122, and then flows to the cooking cavity 110 through the overflowing cavity 1046.

The overflowing cavity 1046 has a larger volume than the overflowing portion 122, and this helps increase the contact area between the smoke and the cooking cavity 110, and further helps improve the balance and the consistency of smoking the food materials at different positions inside the cooking cavity 110, and helps improve the smoked tastes of the food materials.

In some embodiments, as shown in Fig. 3, Fig. 7, Fig. 8, Fig. 9, Fig. 10, Fig. 11, Fig. 12, Fig. 13 and Fig. 14, the frying tray 1042 is provided with a baffle 1048 and a first overflowing port 1050.

The first overflowing port 1050 is located at the peripheral side of the baffle 1048.

The overflowing portion 122 is disposed corresponding to the baffle 1048.

In the embodiment, the structure of the frying tray 1042 is further defined, the frying tray 1042 is provided with the baffle 1048 and the first overflowing port 1050, the overflowing portion 122 is disposed corresponding to the baffle 1048, and the first overflowing port 1050 is located at the peripheral side of the baffle 1048.

The baffle 1048, the first overflowing port 1050 and the overflowing portion122 cooperate with each other to change the flowing path of the smoke.

In an embodiment, the smoke generated in the smoke box 200 flows to the baffle 1048 through the overflowing portion 122, the baffle 1048 can block the smoke from flowing along the current direction continuously, the smoke will make a turn and flows to the first overflowing port 1050 at the peripheral side of the baffle 1048 along the baffle 1048, and flows to the cooking cavity 110 through the first overflowing port 1050.

In addition, when the food materials are cooked, the food materials can generate oil, the oil flows to the first overflowing port 1050 along the food materials, and flows to the oil receiving tray 120 through the first overflowing port 1050, that is, the oil receiving tray 120 has the function of carrying the oil of the food materials. Since the baffle 1048 is disposed corresponding to the overflowing portion 122, the baffle 1048 has the function of blocking the oil from flowing to the overflowing portion 122, to prevent the occurrence of the circumstance that the oil enters the smoke box 200 through the overflowing portion 122. If the oil flows to the smoke box 200 through the overflowing portion 122, the oil will generate oily smoke in a high temperature environment, and this will affect the tastes of the food materials and cause pollution to the environment.

It can be understood that the baffle 1048 is disposed corresponding to the overflowing portion 122, and thus, even if the oil flows to the baffle 1048, the baffle 1048 will change the flowing path of the oil, the oil will flow to the first overflowing port 1050 away from the overflowing portion 122 under the guiding of the baffle 1048 and will be received in the oil receiving tray 120. That is, the oil will not flow to the smoke box 200 through the overflowing portion 122.

That is, the first overflowing port 1050 has both functions of allowing the smoke to enter the cooking cavity 110 and allowing the oil to flow to the oil receiving tray 120.

In some embodiments, as shown in Fig. 7, a portion of the oil receiving tray 120 protrudes towards the direction of the cooking cavity 110 to form a protruding structure 124.

The protruding structure 124 is provided with the overflowing portion 122.

The portion of the oil receiving tray 120 located at the peripheral side of the protruding structure 124 is disposed corresponding to the first overflowing port 1050.

In the embodiment, the structure of the oil receiving tray 120 is further defined, and a portion of the oil receiving tray 120 protrudes towards the direction of the cooking cavity 110 to form the protruding structure 124, and the protruding structure 124 is provided with the overflowing portion 122, i.e., the protruding structure 124 serves as the mounting carrier of the overflowing portion 122.

Since the portion of the oil receiving tray 120 located at the peripheral side of the protruding structure 124 is disposed corresponding to the first overflowing port 1050, the overflowing portion 122 should be higher than the portion of the oil receiving tray 120 located at the peripheral side of the protruding structure 124, that is, only when the accumulated oil is higher than the position of the overflowing portion 122, the oil can flow to the overflowing portion 122. In other words, the arrangement can prevent the occurrence of the circumstance that the oil flows to the smoke box 200 through the overflowing portion 122, and prevent polluting the smoking materials in the smoke box 200, and can prevent the generation of the oily smoke.

It can be understood that the protruding structure 124 is provided with the overflowing portion 122, the portion of the oil receiving tray 120 located at the peripheral side of the protruding structure 124 is disposed corresponding to the first overflowing port 1050, that is, the height of the region of the oil receiving tray 120 used for containing and receiving the oil is smaller than the height of the overflowing portion 122.

In addition, the overflowing cavity 1046 is enclosed by the outer surface of the frying tray 1042 and the inner surface of the frying barrel 1044, and thus, the smoke generated in the smoke box 200 flows to the overflowing cavity 1046 through the overflowing portion 122, and flows to the first overflowing port 1050 located at the peripheral side of the baffle 1048 through the overflowing cavity 1046, to flow to the top of the food materials from the bottom of the food materials through the first overflowing port 1050 and then thoroughly smoke the food materials, and thus, different positions of the food materials can be effectively smoked, and the balance and the consistency of the smoking effect can be ensured and the tastes of the food materials can be ensured.

In an example, the frying tray 1042 is provided with a grid region, and a plurality of the first overflowing ports 1050 are formed in the grid region.

In an embodiment, the overflowing portion 122 is provided at the side of the protruding structure 124 facing the cooking cavity 110.

In an embodiment, the overflowing portion 122 is provided at the peripheral side of the protruding structure 124.

In some embodiments, as shown in Fig. 3, Fig. 4, Fig. 8, Fig. 11 and Fig. 13, at least one of the machine body 102 and the carrier 104 is provided with a smoke flow channel 106, and the smoke flow channel 106 communicates the overflowing portion 122 with the smoke box 200.

In the embodiment, the structures of the machine body 102 and the carrier 104 are further defined, and at least one of the machine body 102 and the carrier 104 is provided with the smoke flow channel 106, i.e., the machine body 102 is provided with the smoke flow channel 106, or the carrier 104 is provided with the smoke flow channel 106, or both of the machine body 102 and the carrier 104 are provided with the smoke flow channel 106. The smoke flow channel106 communicates with the overflowing portion 122, and the smoke flow channel 106 communicates with the smoke box 200, i.e., the smoke flow channel 106 communicates the overflowing portion 122 with the smoke box 200. The smoke generated in the smoke box 200 flows to the smoke flow channel 106, and flows to the overflowing portion 122 through the smoke flow channel 106, and then flows to the cooking cavity 110 through the overflowing portion 122.

When the machine body 102 is provided with the smoke flow channel 106, the machine body 102 is used as the mounting carrier of the smoke flow channel 106, has the functions of mounting and fixing the smoke flow channel 106, and can ensure the cooperating dimensions of the smoke flow channel 106, the overflowing portion 122 and the smoke box 200.

When the carrier 104 is provided with the smoke flow channel 106, the carrier 104 is used as the mounting carrier of the smoke flow channel 106, has the functions of mounting and fixing the smoke flow channel 106, and can ensure the cooperating dimensions of the smoke flow channel 106, the overflowing portion 122 and the smoke box 200.

In some embodiments, the number of the smoke flow channel 106 is multiple, and the plurality of smoke flow channels 106 are arranged at intervals along the circumferential direction of the cooking cavity 110.

In the embodiment, the number of the smoke flow channels 106 is multiple, the cooperating structure of the plurality of smoke flow channels 106 and the cooking cavity 110 is that the plurality of smoke flow channels 106 are arranged at intervals along the circumferential direction of the cooking cavity 110, and this arrangement helps the smoke flow to the cooking cavity 110 at the same time from multiple directions and multiple angles through the plurality of smoke flow channels 106 to smoke the food materials thoroughly, and ensures that the food materials at different positions can all contact the smoke thoroughly to ensure the balance and the consistency of the smoked food materials, and can ensure the tastes of the cooked food materials.

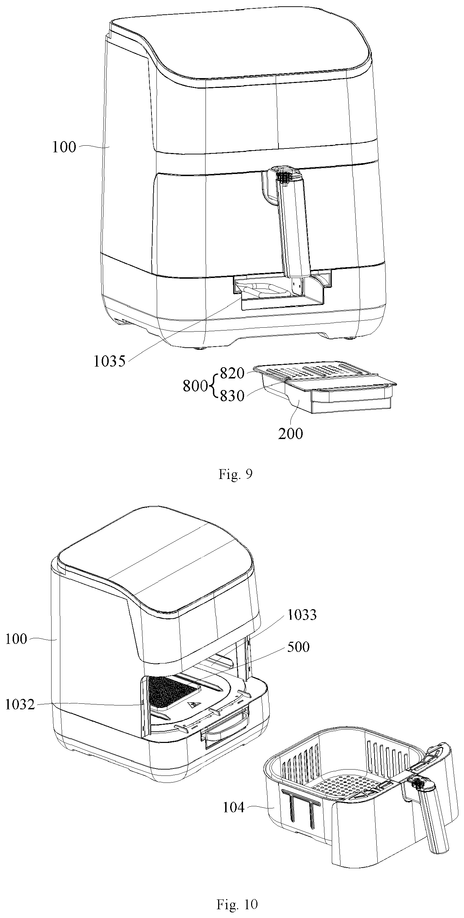

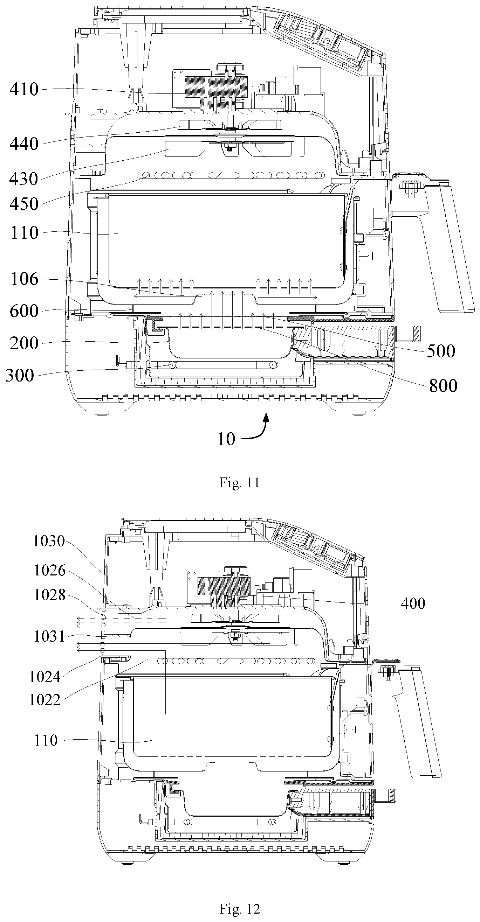

In some embodiments, as shown in Fig. 10 and Fig. 11, the air fryer 10 further comprises a filter 500.

The filter 500 is provided in the smoke flow channel 106.

In the embodiment, the structure of the air fryer 10 is further defined, and the air fryer 10 further comprises the filter 500, the filter 500 is provided in the smoke flow channel 106, the filter 500 has a function of filtering sundries, and prevents the sundries and the like from dropping into the smoke box 200 through the smoke flow channel 106, and thus can ensure the effectiveness of generating the smoke by the smoke box 200. If the sundries drop into the smoke box 200, the sundries will be decomposed and gives off smoke under the effect of the high temperature, and this will affect user experience and the tastes of foods.

Meanwhile, when the machine body 102 is provided with the smoke flow channel 106, the filter 500 is disposed and the filter 500 is located between the overflowing portion 122 and the smoke box 200, the filter 500 can prevent the occurrence of the circumstance that users touch the high-temperature smoke box 200 and the heating member 300 by mistake, and thus the safety and reliability of the air fryer 10 in use can be improved.

In an example, the filter 500 comprises a filter screen, a filter cotton, etc., which will not be listed herein.

In an embodiment, the filter 500 is detachably connected to the smoke flow channel 106. That is, the disassembling and assembling of the filter 500 and the mounting position of the filter 500 with respect to the smoke flow channel 106 can be determined according to the actual circumstances, and this can further meet the use needs on the air fryers of different models, and thus achieves strong product adaptability and improves the service performance of the product.

In some embodiments, as shown in Fig. 3, Fig. 4, Fig. 8, Fig. 11 and Fig. 13, the machine body 102 is provided with a sealing member 600, the sealing member 600 abuts the outer surface of the carrier 104, and the sealing member 600 is disposed surrounding the overflowing portion 122.

In the embodiment, through reasonably configuring the structure of the machine body 102, the machine body 102 is provided with the sealing member 600, the sealing member 600 abuts the outer surface of the carrier 104, the sealing member 600 is configured to seal the connection portion between the machine body 102 and the carrier 104, and this prevents the occurrence of the circumstance that the smoke escapes from the connection portion between the machine body 102 and the carrier 104, and the smoke is directly guided to the overflowing portion 122.

In addition, the sealing member 600 is disposed surrounding the overflowing portion 122, and thus can seal the connection portion between the machine body 102 and the carrier 104 from multiple directions and multiple angles, and can ensure the sealing performance of the smoke flow channel 106.

In some embodiments, the sealing member 600 is disposed surrounding the overflowing portion 122; however, in some other embodiments, the sealing member 600 is disposed surrounding the notch of the accommodating groove 240 of the smoke box 200.

In an example, the sealing member 600 comprises a sealing ring, and the sealing ring is a rubber ring, a plastic ring, etc.

In some embodiments, as shown in Fig. 12, the machine body 102 is further provided with a first passage 1022 and a first outlet 1024.

The first passage 1022 communicates the cooking cavity 110 with the first outlet 1024.

In the embodiment, the structure of the machine body 102 is further defined, and the machine body 102 is further provided with the first passage 1022 and the first outlet 1024, the first passage 1022 communicates with the first outlet 1024, and the first passage 1022 communicates with the cooking cavity 110, and thus, the smoke in the cooking cavity 110 can flow to the first passage 1022, and is discharged out of the air fryer 10 through the first outlet 1024. That is, the first passage 1022 has the function of discharging the smoke. The use needs of the air fryer 10 can be satisfied.

In an example, the first outlet 1024 is located above the cooking cavity 110.

In an example, the first outlet 1024 is located at the side of the cooking cavity 110.

In an example, the first outlet 1024 is located in the bottom of the cooking cavity 110.

In some embodiments, as shown in Fig. 12, the hot air apparatus 400 comprises a motor 410, the machine body 102 is further provided with a second passage 1026 and a second outlet 1028.

At least a portion of the motor 410 is located in the second passage 1026.

The second passage 1026 and the first passage 1022 are arranged at an interval, and the second passage 1026 communicates with the second outlet 1028.

In the embodiment, the structure of the machine body 102 is further defined, and the machine body 102 is further provided with the second passage 1026 and the second outlet 1028, and the second passage 1026 communicates with the second outlet 1028.

And, the hot air apparatus 400 comprises the motor 410, at least a portion of the motor 410is located in the second passage 1026, the airstream in the second passage 1026 will be discharged out of the air fryer 10 through the second outlet 1028, the flowing of the airstream will take the heat generated when the motor 410 works, to achieve the function of cooling the motor 410 and dissipating heat for the motor 410. That is, the second passage 1026 has the function of heat dissipation.

In addition, the second passage 1026 and the first passage 1022 are arranged at an interval, that is, the first passage 1022 and the second passage 1026 are two relatively independent passages, the airstream in the first passage 1022 will not flow to the second passage 1026, and the airstream in the second passage 1026 will not flow to the first passage 1022. The arrangement can prevent the occurrence of the circumstance that the smoke in the first passage 1022 flows back to the second passage 1026, and meanwhile can prevent the hot air in the second passage 1026 from flowing back to the first passage 1022.

In some examples, the air fryer 10 further comprises: a circuit board, provided in the second passage 1026, and the circuit board is electrically connected to the hot air apparatus 400.

In the example, the structure of the air fryer 10 is further defined, the air fryer 10 further comprises the circuit board, the circuit board is provided in the second passage 1026, and the circuit board is electrically connected to the hot air apparatus 400; the circuit board has the function of controlling the working of the hot air apparatus 400. The circuit board generates heat when it works, the circuit board is placed in the second passage 1026, the airstream in the second passage 1026 will be discharged out of the air fryer 10 through the second outlet 1028, the flowing of the airstream will take the heat generated when the circuit board works, and thus the function of cooling the circuit board and dissipating heat for the circuit board is achieved.

It can be understood that electronic members are provided on the circuit board.

In some examples, as shown in Fig. 2, Fig. 3, Fig. 4, Fig. 8, Fig. 11 and Fig. 13, the hot air apparatus 400 further comprises a drive shaft 420, a first fan blade 430, a second fan blade 440 and a heat generating member 450.

The drive shaft 420 is connected to the motor 410, and the drive shaft 420 passes through the second passage 1026 and extends into the first passage 1022.

The first fan blade 430 is located in the first passage 1022, and the first fan blade 430 is connected to the drive shaft 420.

The second fan blade 440 is located in the second passage 1026, and the second fan blade 440 is connected to the drive shaft 420.

The heat generating member 450 is provided in the first passage 1022.

In the example, the hot air apparatus 400 further comprises the drive shaft 420, the first fan blade 430, the second fan blade 440 and the heat generating member 450.

The drive shaft 420 is connected to the motor 410, the drive shaft 420 passes through the second passage 1026 and extends into the first passage 1022, and the drive shaft 420 is connected to the first fan blade 430. The motor 410 works and thus can drive the drive shaft 420 to rotate, the rotating of the drive shaft 420 can drive the first fan blade 430 to rotate, and the rotating of the first fan blade 430 can drive the hot air to circulate between the cooking cavity 110 and the first passage 1022.

The drive shaft 420is connected to the motor 410, and the drive shaft 420 is further connected to the second fan blade 440 which is located in the second passage 1026. The motor 410 works and thus can drive the drive shaft 420 to rotate, the rotating of the drive shaft 420 can drive the second fan blade 440 to rotate, and the rotating of the second fan blade 440 can drive the airstream in the second passage 1026 to flow to the second outlet 1028, to meet the use need of dissipating heat for the motor 410, and thus, the temperature rise of the motor 410 can be lowered, and this helps extend the service life of the motor 410.

It can be understood that an air inlet is further provided in the machine body 102, and the air inlet communicates with the second passage 1026.

It can be understood that the heat generating member 450 works to heat the airstream in the first passage 1022, and the hot air is generated therein. And, the heat generating member 450 comprises a heat generating tube, a heat generating sheet, a heat generating plate, etc., which will not be listed herein.

In addition, both the first fan blade 430 and the second fan blade 440 are connected to the drive shaft 420, that is, the motor 410 can drive the first fan blade 430 and the second fan blade 440 to work at the same time, and thus, the use need on the working of the first fan blade 430 and the second fan blade 440 is ensured and the device input for driving the first fan blade 430 and the second fan blade 440 to work is further reduced, and thus the production cost of the air fryer 10is reduced.

In an example, both the first fan blade 430 and the second fan blade 440 comprise: a deflector, and the deflector is connected to the drive shaft 420; a plurality of fan blades, and the plurality of fan blades are connected to the same side of the deflector, and the plurality of fan blades are arranged at intervals in the circumferential direction of the drive shaft 420; and, the deflector of the first fan blade 430 is disposed opposite to the deflector of the second fan blade 440. It can be understood that the first fan blade 430 and the second fan blade 440 are in a mirror arrangement which takes the plane perpendicular to the axial direction of the drive shaft 420 as a symmetry plane. Due to the arrangement, when the motor 410 drives the first fan blade 430 and the second fan blade 440 to move at the same time, the first fan blade 430 can drive the hot air to circulate between the first passage 1022 and the cooking cavity 110, and the second fan blade 440 can dissipate heat for the motor 410 and the circuit board.

In some embodiments, as shown in Fig. 12, the machine body 102 comprises: a housing 1030, and the housing 1030 is provided with the first outlet 1024, the second outlet 1028, the first passage 1022 and the second passage 1026, the first passage 1022 communicates the cooking cavity 110 with the first outlet 1024, and the second passage 1026 communicates with the second outlet 1028; a partition plate 1031, provided in the housing 1030, and the partition plate 1031 comprises a first end surface and a second end surface which are disposed opposite to each other in the height direction of the machine body 102, the first end surface forms a portion of the wall surface of the first passage 1022, the second end surface forms a portion of the wall surface of the second passage 1026, and the partition plate 1031 is located between the first outlet 1024 and the second outlet 1028; and the hot air apparatus 400 comprises the motor 410, and at least a portion of the motor 410 is located in the second passage 1026.

In the embodiment, the structure of the machine body 102 is further detailed, the machine body 102 comprises the housing 1030 and the partition plate 1031, and the partition plate 1031 is provided in the housing 1030.

The partition plate 1031 comprises the first end surface and the second end surface, the first end surface and second end surface are arranged at an interval and opposite to each other in the height direction of the machine body 102. The first end surface forms a portion of the wall surface of the first passage 1022, the second end surface forms a portion of the wall surface of the second passage 1026. That is, the first passage 1022 and the second passage 1026 are located at the two opposite sides of the partition plate 1031.

Since the partition plate 1031 is located between the first outlet 1024 and the second outlet 1028, that is, the partition plate 1031 has the function of partitioning the first outlet 1024 from the second outlet 1028, and this can effectively prevent the airstream discharged out of the first outlet 1024 from flowing into the second outlet 1028, and can further effectively prevent the airstream discharged out of the second outlet 1028 from flowing into the first outlet 1024. This arrangement can prevent the occurrence of the circumstance that the smoke in the first passage 1022 flows back to the second passage 1026, and can further prevent the hot air in the second passage 1026 from flowing back to the first passage 1022.

In some examples, as shown in Fig. 1, Fig. 2, Fig. 5 and Fig. 10, the machine body 102 comprises a cavity 1033 with a first opening 1032, and the carrier 104 can be detachably provided in the cavity 1033 through the first opening 1032.

In the example, the cooperating structure of the machine body 102 and the carrier 104 is further defined, the machine body 102 comprises the cavity 1033 with the first opening 1032, the carrier 104 is detachably provided in the cavity 1033 through the first opening 1032, that is, the carrier 104 can be inserted into the cavity 1033 through the first opening 1032 in the machine body 102 to seal the cavity 1033, and the carrier 104 can further be separated from the machine body 102 through the first opening 1032 in the machine body 102 to open the cavity 1033.

Since the carrier 104 is provided with the cooking cavity 110 and the oil receiving tray 120, the cooking cavity 110 and the oil receiving tray 120 are further separated from the machine body 102 when the carrier 104 is separated from the machine body 102.

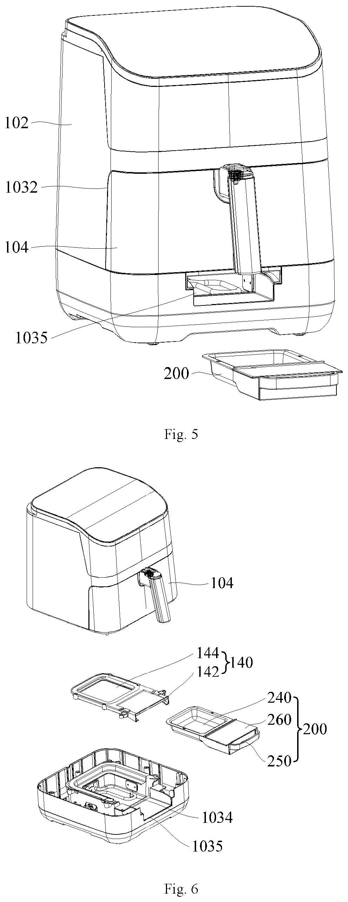

In some examples, as shown in Fig. 2 and Fig. 6, a smoke cavity 1034 is enclosed by the carrier 104 and the wall of the cavity 1033, and the smoke box 200 is detachably connected to the smoke cavity 1034.

In the example, the smoke cavity 1034 is enclosed by the carrier 104 and the wall of the cavity 1033, i.e., when the carrier 104 is inserted into the cavity 1033 through the first opening 1032, the smoke cavity 1034 for accommodating the smoke box 200 is enclosed between the carrier 104 and the wall of the cavity 1033. The smoke cavity 1034 has the function of mounting and fixing the smoke box 200.

It can be understood that the smoke cavity 1034 is partitioned from the cavity 1033 by the carrier 104; when the carrier 104 is separated from the machine body 102 through the first opening 1032 in the machine body 102, the smoke box 200 is completely exposed in the cavity 1033, and at the point, users can disassemble and assemble the smoke box 200 through the first opening 1032, and can further put smoking materials in the smoke box 200 through the first opening 1032.

The smoke box 200 is detachably connected to the smoke cavity 1034, i.e., the disassembling and assembling of the smoke box 200 and the mounting position of the smoke box 200 with respect to the smoke cavity 1034 can be determined according to actual circumstances, and this can adapt to the use needs on the air fryers 10 of different models, and thus achieves strong product adaptability and improves the service performance of the product. In addition, the smoke box 200 is detachably connected to the smoke cavity 1034, and this helps wash and clean the smoke box 200, and can ensure the sanitation and safety of the air fryer 10 in use.

In an example, when the smoking mode of the air fryer 10 is used, the carrier 104 can be separated from the machine body 102 through the first opening 1032 in the machine body 102, the smoking materials are put into the smoke box 200, and then, the carrier 104 is inserted into the cavity 1033 through the first opening 1032 in the machine body 102.

In an example, when the smoke box 200 is cleaned, the carrier 104 can be separated from the machine body 102 through the first opening 1032 in the machine body 102, then the smoke box 200 is taken out for cleaning.

In an example, when the food materials do not need to be smoked, the smoke box 200 can be taken out of the machine body 102, to directly cook the food materials in the cooking cavity 110 and further achieve conventional cooking operations such air-frying and baking. The arrangement can satisfy diversified use needs, the functions of the product are enriched, the purpose of achieving multiple cooking functions can be achieved, and the use performance and the market competitiveness of the product are improved.

In an example, the connection method between the smoke box 200 and the machine body 102 comprises, but is not limited to, snapping, screwing, magnetic attaching and fastening connection through a fastener (in some embodiments, a screw, a bolt or a rivet).

In some examples, as shown in Fig. 1, Fig. 5, Fig. 6 and Fig. 9, the machine body 102 is further provided with a second opening 1035, and the smoke box 200 is inserted into the smoke cavity 1034 through the second opening 1035.

In the example, the structure of the machine body 102 is further defined, and the machine body 102 is further provided with the second opening 1035, the second opening1035 communicates with the smoke cavity 1034, the smoke box 200 can be inserted into the smoke cavity 1034 through the second opening 1035, and the smoke box 200 can further be drawn out from the smoke cavity 1034 through the second opening 1035.

The smoke box 200 can be separated from the smoke cavity 1034 through the second opening 1035 to clean the smoke box 200 or put smoking materials in the smoke box 200.

In some examples, as shown in Fig. 6, the smoke box 200 is provided with an accommodating groove 240, and the accommodating groove 240 communicates with the overflowing portion 122.

In the example, the structure of the smoke box 200 is further defined, the smoke box 200 is provided with the accommodating groove 240, the smoking materials can be put into the accommodating groove 240, and can further be taken out of the accommodating groove 240.

The accommodating groove 240 communicates with the overflowing portion 122, and the smoke flows to the overflowing portion 122 through the notch of the accommodating groove 240.

In some examples, as shown in Fig. 8 and Fig. 9, the air fryer 10 further comprises a smoke cover 800.

The smoke cover 800 is detachably connected to the smoke box 200.

The smoke cover 800 is provided with a through hole 810, and the accommodating groove 240 communicates with the overflowing portion122 via the through hole 810.

In the example, the structure of the air fryer 10 is further defined, and the air fryer 10 further comprises the smoke cover 800, and the smoke cover 800 is detachably connected to the smoke box 200, i.e., the assembling and disassembling of the smoke cover 800 and the smoke box 200 and the mounting position of the smoke cover 800 with respect to the smoke box 200 can be determined according to actual circumstances, and this can further meet the use needs on the air fryers 10 of different models, and achieves strong product adaptability and improves the service performance of the product.

In addition, the smoke cover 800 is provided with the through hole 810, the through hole 810 communicates with the accommodating groove 240, and the through hole 810 communicates with the overflowing portion 122, i.e., the accommodating groove 240 communicates with the overflowing portion122 via the through hole 810. The smoke in the accommodating groove 240 flows out of the smoke box 200 via the through hole 810, and then flows to the overflowing portion 122.

The smoke cover 800 is arranged covering the smoke box 200, and thus the smoke cover 800 can prevent the scattering of the particles of the smoking materials in the smoke box 200, and the smoke box 200 cooperates with the smoke cover 800 to limit the smoking materials, to prevent the overflow of the smoking materials, especially when the smoke box 200 is drawn.

In some examples, the accommodating groove 240 of the air fryer 10 communicates with the external atmosphere.

In the embodiment, through reasonably communicating the accommodating groove 240 of the air fryer 10 with the external atmosphere, i.e., the air in the environment can flow to the accommodating groove 240, and the gas flows to the overflowing portion 122 after passing through the smoking materials. The gas passes through the smoke box 200 and can contact the smoking materials thoroughly, and this helps burn the smoking materials and can burn the smoking materials thoroughly, and the smoke materials are burned completely. This helps improve the smoking efficiency of the smoking materials.

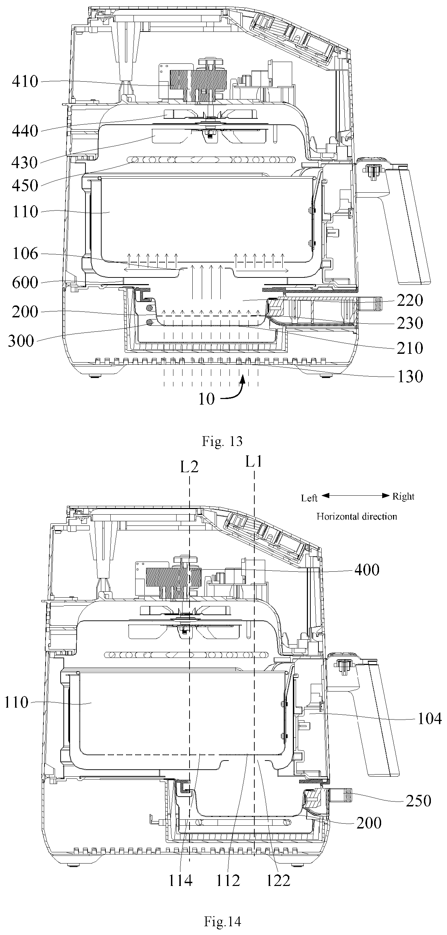

In some examples, as shown in Fig. 13, the machine 100 is further provided with an entrance 130, the smoke box 200 is provided with meshes 210, and the meshes 210 communicate the entrance 130 with the accommodating groove 240.

In the example, the cooperating structure of the machine 100 and the smoke box 200 is further defined. The machine 100 is further provided with the entrance 130. The smoke box 200 is provided with meshes 210. The entrance 130 communicates with the meshes 210 of the smoke box 200, the meshes 210 communicate with the accommodating groove 240, and the accommodating groove 240 communicates with the overflowing portion 122.

It can be understood that the gas in the environment can flow into the meshes 210 through the entrance 130, and then flow to the overflowing portion 122 after going through the smoking materials. The gas flows through the smoke box 200, and can contact the smoking materials thoroughly, and this helps the burning of the smoking materials and can burn the smoking materials thoroughly, and the smoke materials are burned completely. This helps improve the smoking efficiency of the smoking materials.

It can be understood that the entrance 130, the meshes 210 and the accommodating groove 240 form an air passage, and the smoking materials can contact the air thoroughly.

In an example, the portion of the machine body 102 located at the entrance 130 and the smoke box 200 is a flame retardant part, and this can reduce the probability of the occurrence of the burning of the machine body 102 at high temperature and helps improve the safety and reliability of the air fryer 10 in use.

It can be understood that the notch of the accommodating groove 240 forms a second overflowing port 220, and the second overflowing port 220 communicates with the overflowing portion 122.

In some examples, the entrance 130 is located at the side of the smoke box 200 away from the overflowing portion 122.

In the example, the arrangement position of the entrance 130 is further defined, and the entrance 130 is located at the side of the smoke box 200 away from the overflowing portion 122, and this arrangement makes the air flow to the overflowing portion 122 from the side of the smoke box 200 away from the overflowing portion 122, and extends the flowing path of the air in the accommodating groove 240, and thus makes the smoking materials contact the air thoroughly, and helps improve the burning rate of the smoking materials.

In some examples, as shown in Fig. 13, grid placing boards 230 are provided in the accommodating groove 240, the grid placing boards 230 and the meshes 210 are arranged at intervals, and the aperture of the grid placing boards 230 is greater than the aperture of the meshes 210.

In the example, through reasonably configuring the structure of the smoke box 200, the grid placing boards 230 are provided in the accommodating groove 240, and the smoking materials are placed on the grid placing boards 230. When the air fryer 10 works, the gas can flow to the bottom of the smoking materials through the grid placing boards 230, and then flow to the top of the smoking materials, to thoroughly heat the smoking materials. This helps burn the smoking materials thoroughly.

And, the grid placing boards 230 and the meshes 210 are arranged at intervals, i.e., there are gaps between the grid placing boards 230 and the meshes 210, and this helps the gas flow to the smoking materials at different positions on the grid placing boards 230, and helps burn the smoking materials, and thus the smoking materials can be heated thoroughly.

In addition, after burning, the smoking materials will form ashes with smaller grain sizes. The aperture of the grid placing boards 230 is arranged to be greater than the aperture of the meshes 210, the meshes 210 have the function of carrying the ashes, to lower the occurrence of the circumstance that the ashes drop out of the air fryer 10 through the entrance 130.

In some examples, the grid placing boards 230 are provided in the accommodating groove 240, the grid placing boards 230 and the meshes 210 are arranged at intervals, and the aperture of the grid placing boards 230 is smaller than the aperture of the meshes 210.

In the example, through reasonably configuring the structure of the smoke box 200, the grid placing boards 230 are provided in the accommodating groove 240, and the smoking materials are placed on the grid placing boards 230. When the air fryer 10 works, gas can flow to the bottom of the smoking materials through the grid placing boards 230, and then flow to the top of the smoking materials, to thoroughly heat the smoking materials. This helps burn the smoking materials thoroughly.

And, the grid placing boards 230 and the meshes 210 are arranged at intervals, i.e., there are gaps between the grid placing boards 230 and the meshes 210, and this helps the gas flow to the smoking materials at different positions on the grid placing boards 230, and helps burn the smoking materials, and thus the smoking materials can be heated thoroughly.

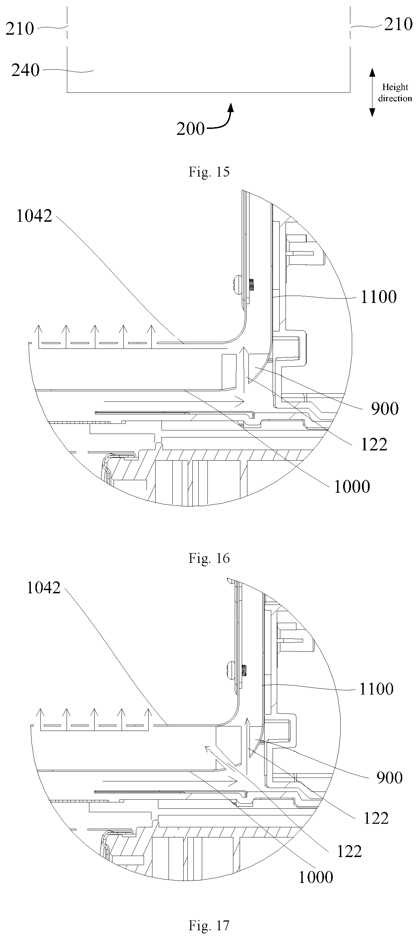

And, the aperture of the grid placing board 230 is smaller than the aperture of the meshes 210, i.e., compared with the aperture of the meshes 210, the aperture of the grid placing board 230 is smaller. Since the aperture of the grid placing board 230 is smaller, the grid placing board 230 can carry both the smoking materials and the ashes after the burning of the smoking materials. The meshes 210 are greater, and it helps pass the gas, and the gas can contact the smoking materials thoroughly. In some embodiments, as shown in Fig. 15, the side wall of the smoke box 200 is provided with the meshes 210, and in the height direction, the accommodating groove 240 is located under the meshes 210.

In the example, the structure of the smoke box 200 is further defined, and the side wall of the smoke box 200 is provided with the meshes 210, and thus, the gas in the environment can flow to the accommodating groove through the meshes 210, and the gas flows to the overflowing portion 122 after passing through the smoking materials. The gas passes through the smoke box 200, and can contact the smoking materials thoroughly, and this helps the burning of the smoking materials and can burn the smoking materials thoroughly, and the smoking materials are burned completely. This helps improve the smoking efficiency of the smoking materials. Since the side wall of the smoke box 200 is provided with the meshes 210, the modification to the smoke box 200 is reduced while the effective contact of the air with the smoking materials is ensured, and this helps reduce the modification cost.

In addition, in the height direction, the accommodating groove 240 is located under the meshes 210, and thus, the ashes of the smoking materials after burning will not flow out of the smoke box through the meshes 210.

In some examples, as shown in Fig. 16 and Fig. 17, the connection portion between the inner side wall 1100 of the frying barrel and the inner bottom wall 1000 of the frying barrel is provided with a protruding portion 900, the protruding portion 900 extends towards the direction of the cooking cavity 110, and the overflowing portion 122 is provided in the protruding portion 900; the overflowing portion 122 faces the side gap of the frying tray 1042 and the frying barrel 1044, or the overflowing portion 122 faces the oil leakage-free hole of the frying tray 1042.

In the example, the structure of the frying barrel 1044 is reasonably disposed, and the connection portion between the inner side wall 1100 of the frying barrel and the inner bottom wall 1000 of the frying barrel is provided with the protruding portion 900, and the protruding portion 900 is provided with the overflowing portion 122, i.e., the protruding portion 900 is used as the mounting carrier of the overflowing portion 122. Along the vertical direction, the overflowing portion 122 is arranged facing the side gap of the frying barrel 1044 and the frying tray 1042, or the overflowing portion 122 faces the oil leakage-free hole in the bottom wall of the frying tray 1042.

The protruding portion 900 extends towards the direction of the cooking cavity 110, and thus, only when the accumulated oil is higher than the position of the overflowing portion 122, the oilcan flow to the overflowing portion 122. In other words, the arrangement can have the function of blocking the oil from flowing to the smoke box 200through the overflowing portion 122, and prevent polluting the smoking materials in the smoke box 200, and can prevent the generation of the oily smoke.

In addition, the portion of the frying barrel 1044 at the peripheral side of the protruding portion 900 can store a certain amount of oil.

In some examples, the protruding portion 900 and the frying tray 1042 are arranged at an interval, or the protruding portion 900 abuts the frying tray 1042.

In the example, as shown in Fig. 16, when the protruding portion 900 and the frying tray 1042 are arranged at an interval, a portion of the gas can flow to the cooking cavity 110 through the gap between the protruding portion 900 and the frying tray 1042.

In the example, as shown in Fig. 17, when the protruding portion 900 abuts the frying tray 1042, the protruding portion 900 has the function of supporting and fixing the frying tray 1042, to ensure the position relation between the frying tray 1042 and the frying barrel 1044. And, since the protruding portion 900 is disposed, the position relation between the frying tray 1042 and the frying barrel 1044 can be limited only by the protruding portion 900. Apparently, a connecting portion can further be disposed, and the connection portion connects the frying barrel 1044 and the frying tray 1042, i.e., the connecting portion cooperates with the protruding portion 900 to limit the position relation between the frying tray 1042 and the frying barrel 1044.

And, the overflowing portion 122 goes through the top portion of the protruding portion 900, or goes through the side portion of the protruding portion 900, that is, the smoke can enter the cooking cavity 110 through the bottom portion or the side portion of the frying tray 1042.

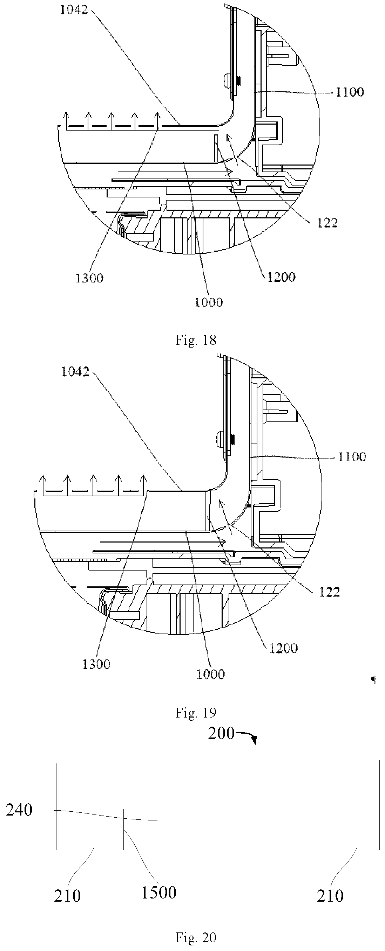

In some examples, as shown in Figs. 18 and 19, the inner bottom wall 1000 of the frying barrel is provided with a plate body 1200, the plate body 1200 extends towards the direction of the cooking cavity 110, the overflowing portion is provided between the plate body 1200 and the inner side wall of the frying barrel 1044; the overflowing portion faces the side gap of the frying tray and the frying barrel, or the overflowing portion faces the oil leakage-free hole of the frying tray.

It can be understood that along the vertical direction, the overflowing portion 122 is arranged facing the side gap of the frying barrel 1044 and the frying tray 1042, or the overflowing portion 122 faces the oil leakage-free hole in the bottom wall of the frying tray 1042. Thus, it is ensured that the smoke flows to the cooking cavity 110, and the oil flowing out of the cooking cavity 110 will not flow to the smoke box 200.

In some examples, the frying tray 1042 is provided with a third overflowing port 1300, the plate body 1200 is located between the third overflowing port 1300 and the overflowing portion 122, and the third overflowing port 1300 communicates the overflowing portion 122 with the cooking cavity 110.

In the example, the structure of the frying barrel 1044 is reasonably disposed, and the inner bottom wall 1000 of the frying barrel is provided with the plate body 1200, and the plate body 1200 is located between the third overflowing port 1300 and the overflowing portion 122.

The plate body 1200 extends towards the direction of the cooking cavity 110, and the plate body 1200 is located between the third overflowing port 1300 and the overflowing portion 122, and thus, only when the accumulated oil is higher than the position of the plate body 1200, the oilcan flow to the overflowing portion 122. In other words, the arrangement can have the function of blocking the oil from flowing to the smoke box 200 through the overflowing portion 122, and prevent polluting the smoking materials in the smoke box 200, and can prevent the generation of the oily smoke.

In addition, the portion of the frying barrel 1044 at the peripheral side of the plate body 1200 can store a certain amount of oil.

In some examples, the plate body 1200 and the frying tray 1042 are arranged at an interval, or the plate body 1200 abuts the frying tray 1042.

In the example, as shown in Fig. 18, when the plate body 1200 and the frying tray 1042 are arranged at an interval, a portion of the gas can flow to the cooking cavity 110 through the gap between the plate body 1200 and the frying tray 1042 and through the bottom wall or the side wall of the frying tray 1042.

In the example, as shown in Fig. 19, when the plate body 1200 abuts the frying tray 1042, the plate body 1200 has the function of supporting and fixing the frying tray 1042, to ensure the position relation between the frying tray 1042 and the frying barrel 1044. At the point, the gas enters the cooking cavity 110 via the side wall of the frying tray 1042. And, since the plate body 1200 is disposed, the position relation between the frying tray 1042 and the frying barrel 1044 can be limited only by the plate body 1200. Apparently, a connecting portion can further be disposed, and the connection portion connects the frying barrel 1044 and the frying tray 1042, i.e., the connecting portion cooperates with the plate body 1200 to limit the position relation between the frying tray 1042 and the frying barrel 1044.

And, the plate body 1200 can be one piece, and the plate body 1200 and the inner wall of the frying barrel 1044 are enclosed tightly. The plate body 1200 can be a ring, and is arranged in an enclosing manner along the circumferential direction of the cooking cavity 110.

In some examples, the heating member 300 is further configured to supply heat to the cooking cavity 110.

In the example, the heating member 300 is further configured to supply heat to the cooking cavity 110, i.e., the heating member 300 can work for the cooking cavity 110 and the smoke box 200, and the heating member 300 has the function of assisting heating the cooking cavity 100. The arrangement enriches the functions of the heating member 300.

In some examples, as shown in Fig. 4 and Fig. 6, the machine 100 is further provided with a guiding device 140, the guiding device 140 is located inside the smoke cavity 1034, and the smoke box 200 and the guiding device 140 are in sliding connection.

In the example, through reasonably configuring the structure of the machine 100, the machine 100 is further provided with the guiding device 140, the guiding device 140 is located inside the smoke cavity 1034, the smoke cavity 1034 is used as a mounting carrier of the guiding device 140, and has the function of mounting and fixing the guiding device 140.

The smoke box 200 and the guiding device 140 are in sliding connection, the guiding device 140 has the function of liming the moving path of the smoke box 200, and the smoke box 200 can slide into the smoke cavity 1034 along the guiding device 140, or slide out of the smoke cavity 1034 along the guiding device 140.

The arrangement can achieve the sliding connection between the smoke box 200 and the machine 100, and helps users withdraw the smoke box 200 with respect to the machine 100, and helps users disassemble and assemble the smoke box 200.

In some examples, as shown in Fig. 6, the guiding device 140 is provided with a slideway 142 and an avoidance port 144, the smoke box 200 and the slideway 142 are in sliding connection, and the slideway 142 encapsulates the outer edge of the smoke box 200, and the smoke box 200 communicates with the smoke cavity 1034 through the avoidance port 144.

In the example, the structure of the guiding device 140 is further defined, and the guiding device 140 is provided with the sideway 142 and the avoidance port 144.

The slideway 142 and the smoke box 200 are in sliding connection, in an example, the outer edge of the smoke box 200 is in sliding connection with the slideway 142. The slideway 142 cooperates with the outer edge of the smoke box 200, and the smoke box 200 can slide along the slideway 142. The slideway 142 encapsulates the outer edge of the smoke box 200, and this arrangement ensures the effectiveness and feasibility of the sliding connection between the slideway 142 and the outer edge of the smoke box 200, and meanwhile increases the contact area and contact angle between the slideway 142 and the smoke box 200, improves the stability and the reliability of the assembling of the smoke box 200 and the guiding device 140, and the circumstance that the smoke box 200 is arranged obliquely will not appear.

Furthermore, the guiding device 140 is provided with the avoidance port 144, the avoidance port 144 is configured to avoid the smoke box 200, and this can meet the use need on communicating the smoke box 200 with the smoke cavity 1034, and provides effective and reliable structural support for the communication between the smoke box 200 and the overflowing portion 122.

In some examples, the guiding device 140 extends along the direction perpendicular to the height direction of the machine 100.

In the example, the extending direction of the guiding device 140 is further defined, the guiding device 140 extends along the direction perpendicular to the height direction of the machine 100, i.e., withdrawing the smoke box 200 along the horizontal direction, or pushing back the smoke box 200 along the horizontal direction. Thus, the smoke box 200 can move and can be taken out and put back.

In some examples, as shown in Fig. 6 and Fig. 14, the smoke box 200 is provided with a handle 250, and the handle 250 protrudes out of the outer surface of the machine 100 through the second opening 1035.

In the example, the structure of the smoke box 200 is further defined, the smoke box 200 is provided with the handle 250, and the handle 250 protrudes out of the outer surface of the machine 100 through the second opening 1035. That is, when the smoke box 200 is assembled in place, the handle 250 on the smoke box 200 will expose out of the outer surface of the machine 100. The disassembling and the assembling of the smoke box 200 can be achieved easily by holding the handle 250.

The arrangement helps reduce the difficulty for disassembling and assembling the smoke box 200, and further helps improve efficiency of disassembling and assembling the smoke box 200.

In some examples, as shown in Fig. 6, the smoke box 200 further comprises a heat-insulating plate 260, and the heat-insulating plate 260 is located at one side of the handle 250.

In the example, the structure of the smoke box 200 is further defined, and the smoke box 200 further comprises the heat-insulating plate 260, and the heat-insulating plate 260 is located at one side of the handle 250.The heat-insulating plate 260 is located at the inner side of the handle 250, that is, the portion of the smoke box 200 located in the machine 100 forms the heat-insulating plate 260, the heat-insulating plate 260 has the function of insulating heat, to reduce the heat transmitted to the handle 250, and thus, the users will not be burned when holding the handle 250.

It can be understood that the smoke box 200 is provided with the accommodating groove 240, the accommodating groove240 has the function of accommodating the smoking materials, and the heat-insulating plate 260 is located between the accommodating groove 240 and the handle 250.

In some examples, as shown in Fig. 9, the smoke cover 800 is further provided with a stiffening rib 820 and a vented zone 830, the stiffening rib 820 is located at one side of the vented zone 830, and the vented zone 830 is provided with a through hole 810.

In the example, the structure of the smoke cover 800 is further defined, and the smoke cover 800 is further provided with the stiffening rib 820 and the vented zone 830, the stiffening rib 820 has the function of increasing the strength of the smoke cover 800, and reducing the occurrence of breaking or even damaging the smoke cover 800.

In addition, the stiffening rib 820 is located at one side of the vented zone 830, and the vented zone 830 is provided with the through hole 810, i.e., the stiffening rib 820 can avoid the arrangement of the vented zone 830, and will not block the smoke from flowing into the overflowing portion 122.

In an example, the number of the stiffening rib 820 is at least one, and the number of the vented zone 830 is at least one.

In the present example, both the numbers of the stiffening rib 820 and the vented zone 830 are multiple, and one vented zone 830 is provided between two adjacent stiffening ribs 820.

In some embodiments, the smoke box 200 is located at the side wall of the machine body 102.

In the embodiment, the smoke box 200 is located at the side wall of the machine body 102, i.e., the smoke box 200 is close to the side wall of the machine body 102, that is, the distance between the smoke box 200 and the side wall of the machine body 102 is relatively small, and thus, the distance for putting the smoking materials to the smoke box 200 can be shortened, and this helps put the smoking materials in the smoke box 200 and further helps clean the smoke box 200, and has the advantage of convenient operation.

In some examples, as shown in Fig. 1, Fig. 5, Fig. 6, Fig. 9 and Fig. 10, the side wall of the machine body 102 is provided with the first opening 1032 and the second opening 1035.

In the example, the positions of the first opening 1032 and the second opening 1035 are further defined, the side wall of the machine body 102 is provided with the first opening 1032 and the second opening 1035, i.e., a carrier 104 is inserted or withdrawn via the side wall of the machine body 102, and the smoke box 200 is inserted or withdrawn from the side wall of the machine body 102. The arrangement has the advantage of convenient operation.

In some examples, as shown in Fig. 14, when the side wall of the machine body 102 is provided with the first opening 1032 and the second opening 1035, the cavity walls of the cooking cavity 110 comprise a barrier wall 112 and an overflowing wall 114, the overflowing wall 114 is connected to the side of the barrier wall 112 away from the first opening 1032, and the barrier wall 112 and the overflowing portion 122 face each other and are arranged at an interval.

In the example, the structure of the cavity walls of the cooking cavity 110 is further defined, and the cavity walls of the cooking cavity 110 comprise the barrier wall 112 and the overflowing wall 114, and the barrier wall 112 and the overflowing portion 122 face each other and are arranged at an interval, and the overflowing wall 114 is connected to the side of the barrier wall 112 away from the first opening 1032.

The overflowing portion 122, the barrier wall 112 and the overflowing wall 114 cooperate with one another to change the flowing path of the smoke.

In an example, the smoke generated in the smoke box 200 flows to the barrier wall 112 through the overflowing portion 122, the barrier wall 112 will block the smoke from continuously flowing along the current direction, the smoke will make a turn and flow to the overflowing wall 114 at the peripheral side of the barrier wall 112 along the barrier wall 112, and then flows to the cooking cavity 110 of the overflowing wall 114.

In addition, when the food materials are cooked, the food materials can generate oil, the oil flows to the overflowing wall 114 along the food materials, and flow to the oil receiving tray 120 through the overflowing wall 114, that is, the oil receiving tray 120 has the function of carrying the oil of the food materials. Since the barrier wall 112and the overflowing portion 122 are opposite to each other and are disposed at an interval, the barrier wall 112 has the function of blocking the oil from flowing to the overflowing portion 122, to prevent the occurrence of the circumstance that the oil enters the smoke box 200 through the overflowing portion 122. If the oil flows to the smoke box 200 through the overflowing portion 122, the oil will generate oily smoke in a high temperature environment, and this will affect the tastes of the food materials and cause pollution to the environment.

It can be understood that the barrier wall 112 and the overflowing portion 122 are disposed corresponding to each other and are disposed at an interval, and thus, even if the oil flows to the barrier wall 112, the barrier wall 112 will change the flowing path of the oil, the oil will flow to the overflowing wall 114 away from the overflowing portion 122 under the guiding of the barrier wall 112 and will be received in the oil receiving tray 120. That is, the oil will not flow to the smoke box 200 through the overflowing portion 122.

That is, the overflowing wall 114 has both functions of allowing the smoke to enter the cooking cavity 110 and allowing the oil to flow to the oil receiving tray 120.

It can be understood that the barrier wall 112 and the overflowing portion 122 face each other and are arranged at interval, i.e., there is a gap between the barrier wall 112 and the overflowing portion 122, and this provides a flowing space for the smoke to flow along the barrier wall 112 to the overflowing wall 114, and the smoke can smoothly flow to the overflowing wall 114.

In an example, as shown in Fig. 14, the smoke box 200 forms a first central line L1 along the horizontal direction, the carrier 104 forms a second central line L2 along the horizontal direction, and the first central line L1 is at the right side of the second central line L2. That is, the smoke box 200 is arranged close to the side wall of the machine.

In some examples, the top wall of the machine body 102 is provided with the first opening 1032, and the side wall of the machine body 102 is provided with the second opening 1035.

In the example, the positions of the first opening 1032 and the second opening 1035 are further defined, the top wall of the machine body 102 is provided with the first opening 1032, and the side wall of the machine body 102 is provided with the second opening 1035, i.e., the carrier 104 is inserted or withdrawn via the top wall of the machine body 102, and the smoke box 200 is inserted or withdrawn from the side wall of the machine body 102. The arrangement has the advantage of convenient operation.

In an example, the machine body 102 is provided with a flip cover, the flip cover is provided covering the first opening 1032. When the flip cover is opened, the first opening 1032 is exposed, and then the carrier 104 can be inserted or withdrawn through the first opening 1032.

The arrows in Fig. 3, Fig. 4, Fig. 8, Fig. 11, Fig. 12 and Fig. 13 indicate the flowing directions of the gas.

In an example, one smoke cavity 1034 is added under the cooking cavity 110, and the particles of the wood chips are placed in the smoke box 200, the smoke box 200 is heated by the heating member 300 to a certain temperature, the particles of the wood chips generate smoke under the effect of high temperature, the generated smoke enters into the cooking cavity 110 through the smoke flow channel 106 between the smoke cavity 1034 and the cooking cavity 110 to smoke foods to increase the tastes of the foods.

The air fryer 10 comprises the cooking cavity 110 and the smoke cavity 1034, the air fryer 10 further comprises the hot air apparatus 400, and the hot air apparatus 400 comprises the fan blade and a heating device. The air fryer 10 further comprises the heating member 300, and the heating member 300 is provided in the smoke cavity 1034. The smoke box 200 is used for placing the particles of the wood chips, the cooking cavity 110 and the smoke cavity 1034 present an upper and lower position relationship, and the cooking cavity 110 communicates with the smoke cavity 1034 through the smoke flow channel 106.

As shown in Fig. 3, the heating member 300 is under the smoke box 200. As shown in Fig. 4, the heating member 300 can further surround the side wall of the smoke box 200.

The bottom portion of the cooking cavity 110 is provided with the oil receiving tray 120. A portion of the oil receiving tray 120 protrudes towards the direction of the cooking cavity 110 to form the protruding structure 124, the protruding structure 124 is provided with the overflowing portion 122, and the overflowing portion 122 communicates with the smoke flow channel 106.

The smoke generated in the smoke cavity 1034 enters the cooking cavity 110 from the overflowing portion 122, to smoke foods.

As shown in Fig. 5 and Fig. 6, the smoke box 200 can move and be taken out. The smoke box 200 can further slide out or can be put back horizontally along the guiding device 140.

As shown in Fig. 8 and Fig. 9, in order to prevent the scattering of the particles of the wood chips in the smoke box 200 when the smoke box 200 is taken out, the smoke cover 800 is provided on the smoke box 200, and the through hole 810 is provided in the smoke cover 800 to allow the smoke to pass through.

As shown in Fig. 10 and Fig. 11, in order to prevent users from touching the high-temperature smoke box 200 or the heating member 300 and meanwhile prevent sundries from falling into the smoke cavity 1034, the filter 500 is provided in the smoke flow channel 106.

As shown in Fig. 12, in order to prevent the smoke from flowing back to the second outlet 1028 from the first outlet 1024, the partition plate 1031 is provided between the first outlet 1024 and the second outlet 1028.

As shown in Fig. 13, in order to adjust the burning state of the particles of the wood chips, an air passage can be provided in the smoke cavity 1034, and, the entrance 130, the meshes 210 and the accommodating groove 240 form the air passage.

As shown in Fig. 14, in order to conveniently take or put back the smoke box 200, the smoke cavity 1034 can further be provided at the side wall of the machine body 102.

In some examples, as shown in Fig. 20, the enclosing panel 1500 is provided in the smoke box 200, the accommodating groove 240 is formed by the enclosing of the enclosing panel 1500, the bottom wall of the smoke box 200 is provided with the meshes 210, and the meshes 210 are located at the peripheral side of the accommodating groove 240, and the height of the side wall of the smoke box 200 is larger than the height of the enclosing panel 1500.

In the example, the structure of the smoke box 200 is further defined, and the enclosing panel 1500 is provided in the smoke box 200, the accommodating groove 240 is formed by the enclosing of the enclosing panel 1500, and the accommodating groove 240 is used for accommodating the smoking materials. The meshes 210 are located at the peripheral side of the accommodating groove 240, and gas in the environment can enter the accommodating groove 240 through the meshes 210. The gas flows through the accommodating groove 240 and can contact the smoking materials thoroughly, and this helps the burning of the smoking materials and can burn the smoking materials thoroughly, and the smoking materials are burned completely. This helps improve the smoking efficiency of the smoking materials.

And, the height of the side wall of the smoke box 200 is larger than the height of the enclosing panel 1500, and this helps the air flow into the accommodating groove 240. In an example, the arrows shown in Fig. 16, Fig. 17, Fig. 18 and Fig. 19 indicate the flowing directions of the airflow.

## Claims

1. An air fryer (10), comprising: a machine (100), provided with a cooking cavity (110) and an oil receiving tray (120), wherein the oil receiving tray (120) is located at one side of the cooking cavity (110); a smoke box (200), provided in the machine (100); and a heating member (300), provided in the machine (100), wherein the heating member (300) is configured to at least supply heat to the smoke box (200),
**characterised in** tha:t
the oil receiving tray (120) is provided with an overflowing portion (122), and
the smoke box (200) communicates with the cooking cavity (110) through the overflowing portion (122)

2. The air fryer (10) according to claim 1, wherein, the oil receiving tray (120) is located between the cooking cavity (110) and the smoke box (200).

3. The air fryer (10) according to claim 2, wherein, the heating member (300) and the smoke box (200) are located at the same side of the oil receiving tray (120).

4. The air fryer (10) according to claim 3, wherein, the smoke box (200) is located between the oil receiving tray (120) and the heating member (300).

5. The air fryer (10) according to claim 3, wherein, the heating member (300) is located at the peripheral side of the smoke box (200).

6. The air fryer (10) according to any of claims 1 to 5, wherein, the machine (100) comprises:
a machine body (102), wherein the smoke box (200) is provided in the machine body (102); a carrier (104), provided in the machine body (102), wherein the carrier (104) is provided with the cooking cavity (110) and the oil receiving tray (120); and the air fryer (10) further comprises a hot air apparatus (400), wherein the hot air apparatus (400) is used for supplying hot air to the cooking cavity (110).

7. The air fryer (10) according to claim 6, wherein, the carrier (104) comprises: a frying tray (1042), wherein the inner surface of the frying tray (1042) encloses the cooking cavity (110); and a frying barrel (1044), connected to the outer surface of the frying tray (1042), wherein at least a portion of the frying barrel (1044) forms the oil receiving tray (120).

8. The air fryer (10) according to claim 7, wherein, an overflowing cavity (1046) is enclosed by the outer surface of the frying tray (1042) and the inner surface of the frying barrel (1044), and the overflowing cavity (1046) communicates with the overflowing portion (122).

9. The air fryer (10) according to claim 7, wherein, the frying tray (1042) is provided with a baffle (1048) and a first overflowing port (1050), the first overflowing port (1050) is located at the peripheral side of the baffle (1048), and the overflowing portion (122) is disposed corresponding to the baffle (1048).

10. The air fryer (10) according to claim 9, wherein, a portion of the oil receiving tray (120) protrudes towards the direction of the cooking cavity (110) to form a protruding structure (124), the protruding structure (124) is provided with the overflowing portion (122), and the portion of the oil receiving tray (120) located at the peripheral side of the protruding structure (124) is disposed corresponding to the first overflowing port (1050).

11. The air fryer (10) according to claim 6, wherein, at least one of the machine body (102) and the carrier (104) is provided with a smoke flow channel (106), and the smoke flow channel (106) communicates the overflowing portion (122) with the smoke box (200).

12. The air fryer (10) according to claim 11, wherein, the number of the smoke flow channel (106) is multiple, and the plurality of smoke flow channels (106) are arranged at intervals along the circumferential direction of the cooking cavity (110).

13. The air fryer (10) according to claim 11, further comprising:
a filter (500), provided in the smoke flow channel (106).

14. The air fryer (10) according to claim 6, wherein, the machine body (102) is provided with a sealing member (600), the sealing member (600) abuts the outer surface of the carrier (104), and the sealing member (600) is disposed surrounding the overflowing portion (122).

15. The air fryer (10) according to claim 6, wherein, the machine body (102) comprises: a housing (1030), wherein the housing (1030) is provided with a first outlet (1024), a second outlet (1028), a first passage (1022) and a second passage (1026), the first passage (1022) communicates the cooking cavity (110) with the first outlet (1024), and the second passage (1026) communicates with the second outlet (1028); a partition plate (1031), provided in the housing (1030), wherein the partition plate (1031) comprises a first end surface and a second end surface which are disposed opposite to each other in the height direction of the machine body (102), the first end surface forms a portion of the wall surface of the first passage (1022), the second end surface forms a portion of the wall surface of the second passage (1026), and the partition plate (1031) is located between the first outlet (1024) and the second outlet (1028); and the hot air apparatus comprises the motor (410), and at least a portion of the motor (410) is located in the second passage (1026).

## Patentansprüche

1. Heißluftfritteuse (10), umfassend: eine Maschine (100), die mit einem Garhohlraum (110) und einer Ölaufnahmewanne (120) versehen ist, wobei sich die Ölaufnahmewanne (120) an einer Seite des Garhohlraums (110) befindet, eine Rauchkammer (200), die in der Maschine (100) bereitgestellt ist, und ein Heizelement (300), das in der Maschine (100) bereitgestellt ist, wobei das Heizelement (300) dafür gestaltet ist, mindestens Wärme zur Rauchkammer (200) zu führen,
**dadurch gekennzeichnet, dass**
die Ölaufnahmewanne (120) mit einem Überlaufabschnitt (122) versehen ist, und
die Rauchkammer (200) durch den Überlaufabschnitt (122) mit dem Garhohlraum (110) in Verbindung steht.

2. Heißluftfritteuse (10) nach Anspruch 1, wobei sich die Ölaufnahmewanne (120) zwischen dem Garhohlraum (110) und der Rauchkammer (200) befindet.

3. Heißluftfritteuse (10) nach Anspruch 2, wobei sich das Heizelement (300) und die Rauchkammer (200) an der gleichen Seite der Ölaufnahmewanne (120) befinden.

4. Heißluftfritteuse (10) nach Anspruch 3, wobei sich die Rauchkammer (200) zwischen der Ölaufnahmewanne (120) und dem Heizelement (300) befindet.

5. Heißluftfritteuse (10) nach Anspruch 3, wobei sich das Heizelement (300) an der Außenseite der Rauchkammer (200) befindet.

6. Heißluftfritteuse (10) nach einem der Ansprüche 1 bis 5, wobei die Maschine (100) Folgendes umfasst:
einen Maschinenkörper (102), wobei die Rauchkammer (200) in dem Maschinenkörper (102) bereitgestellt ist, einen Träger (104), der in dem Maschinenkörper (102) bereitgestellt ist, wobei der Träger (104) mit dem Garhohlraum (110) und der Ölaufnahmewanne (120) versehen ist, und die Heißluftfritteuse (10) ferner eine Heißluftvorrichtung (400) umfasst, wobei die Heißluftvorrichtung (400) verwendet wird, um dem Garhohlraum (110) Heißluft zuzuführen.

7. Heißluftfritteuse (10) nach Anspruch 6, wobei der Träger (104) Folgendes umfasst: eine Frittierwanne (1042), wobei die Innenfläche der Frittierwanne (1042) den Garhohlraum (110) umschließt, und einen Frittierbottich (1044), der mit der Außenfläche der Frittierwanne (1042) verbunden ist, wobei mindestens ein Abschnitt des Frittierbottichs (1044) die Ölaufnahmewanne (120) bildet.

8. Heißluftfritteuse (10) nach Anspruch 7, wobei ein Überlaufhohlraum (1046) von der Außenfläche der Frittierwanne (1042) und der Innenfläche des Frittierbottichs (1044) umschlossen ist und der Überlaufhohlraum (1046) mit dem Überlaufabschnitt (122) in Verbindung steht.

9. Heißluftfritteuse (10) nach Anspruch 7, wobei die Frittierwanne (1042) mit einer Ablenkplatte (1048) und einem ersten Überlaufanschluss (1050) versehen ist, wobei sich der erste Überlaufanschluss (1050) an der Umfangsseite der Ablenkplatte (1048) befindet und der Überlaufabschnitt (122) entsprechend der Ablenkplatte (1048) angeordnet ist.

10. Heißluftfritteuse (10) nach Anspruch 9, wobei ein Abschnitt der Ölaufnahmewanne (120) in Richtung des Garhohlraums (110) hervorsteht, um eine hervorstehende Struktur (124) zu bilden, wobei die hervorstehende Struktur (124) mit dem Überlaufabschnitt (122) versehen ist und der Abschnitt der Ölaufnahmewanne (120), der sich an der Umfangsseite der hervorstehenden Struktur (124) befindet, entsprechend dem ersten Überlaufabschnitt (1050) angeordnet ist.

11. Heißluftfritteuse (10) nach Anspruch 6, wobei mindestens eines von dem Maschinenkörper (102) und dem Träger (104) mit einem Rauchströmungskanal (106) versehen ist, und der Rauchströmungskanal (106) mit dem Überlaufabschnitt (122) mit der Rauchkammer (200) in Verbindung steht.

12. Heißluftfritteuse (10) nach Anspruch 11, wobei die Anzahl des Rauchströmungskanals (106) mehrere ist und die mehreren Rauchströmungskanäle (106) in Intervallen entlang der Umfangsrichtung des Garhohlraums (110) angeordnet sind.

13. Heißluftfritteuse (10) nach Anspruch 11, ferner umfassend:
einen Filter (500), der in dem Rauchströmungskanal (106) bereitgestellt ist.

14. Heißluftfritteuse (10) nach Anspruch 6, wobei der Maschinenkörper (102) mit einem Dichtungselement (600) versehen ist, das Dichtungselement (600) an der Außenfläche des Trägers (104) anliegt und das Dichtungselement (600) den Überlaufabschnitt (122) umgebend angeordnet ist.

15. Heißluftfritteuse (10) nach Anspruch 6, wobei der Maschinenkörper (102) Folgendes umfasst: ein Gehäuse (1030), wobei das Gehäuse (1030) mit einem ersten Auslass (1024), einem zweiten Auslass (1028), einem ersten Durchlass (1022) und einem zweiten Durchlass (1026) versehen ist, wobei der erste Durchlass (1022) den Garhohlraum (110) mit dem ersten Auslass (1024) verbindet und der zweite Durchlass (1026) mit dem zweiten Auslass (1028) in Verbindung steht, eine Trennplatte (1031), die in dem Gehäuse (1030) bereitgestellt ist, wobei die Trennplatte (1031) eine erste Endfläche und eine zweite Endfläche umfasst, die in der Höhenrichtung des Maschinenkörpers (102) einander gegenüber angeordnet sind, wobei die erste Endfläche einen Abschnitt der Wandfläche des ersten Durchlasses (1022) bildet, die zweite Endfläche einen Abschnitt der Wandfläche des zweiten Durchlasses (1026) bildet und sich die Trennplatte (1031) zwischen dem ersten Auslass (1024) und dem zweiten Auslass (1028) befindet und die Heißluftvorrichtung den Motor (410) umfasst und sich mindestens ein Abschnitt des Motors (410) in dem zweiten Durchlass (1026) befindet.

## Revendications

1. Friteuse à air chaud (10), comprenant : une machine (100), dotée d'une cavité de cuisson (110) et d'un plateau de réception d'huile (120), dans laquelle le plateau de réception d'huile (120) est situé au niveau d'un côté de la cavité de cuisson (110) ; une boîte à fumée (200), disposée dans la machine (100) ; et un élément chauffant (300), disposé dans la machine (100), dans laquelle l'élément chauffant (300) est configuré pour au moins fournir de la chaleur à la boîte à fumée (200),
**caractérisée en ce que** :
le plateau de réception d'huile (120) est doté d'une partie de débordement (122), et
la boîte à fumée (200) communique avec la cavité de cuisson (110) par le biais de la partie de débordement (122).

2. Friteuse à air chaud (10) selon la revendication 1, dans laquelle le plateau de réception d'huile (120) est situé entre la cavité de cuisson (110) et la boîte à fumée (200).

3. Friteuse à air chaud (10) selon la revendication 2, dans laquelle l'élément chauffant (300) et la boîte à fumée (200) sont situés du même côté de le plateau de réception d'huile (120).

4. Friteuse à air chaud (10) selon la revendication 3, dans laquelle la boîte à fumée (200) est située entre le plateau de réception d'huile (120) et l'élément chauffant (300).

5. Friteuse à air chaud (10) selon la revendication 3, dans laquelle l'élément chauffant (300) est situé au niveau du côté périphérique de la boîte à fumée (200).

6. Friteuse à air chaud (10) selon l'une quelconque des revendications 1 à 5, dans laquelle la machine (100) comprend :
un corps de machine (102), dans laquelle la boîte à fumée (200) est disposée dans le corps de machine (102) ; un support (104), disposé dans le corps de machine (102), dans laquelle le support (104) est doté de la cavité de cuisson (110) et du plateau de réception d'huile (120) ; et la friteuse à air chaud (10) comprend en outre un appareil à air chaud (400), dans laquelle l'appareil à air chaud (400) est utilisé pour fournir de l'air chaud à la cavité de cuisson (110).

7. Friteuse à air chaud (10) selon la revendication 6, dans laquelle le support (104) comprend : un plateau de friture (1042), dans laquelle la surface interne du plateau de friture (1042) enferme la cavité de cuisson (110) ; et un bac à friture (1044), raccordé à la surface externe du plateau de friture (1042), dans laquelle au moins une partie du bac à friture (1044) forme le plateau de réception d'huile (120).

8. Friteuse à air chaud (10) selon la revendication 7, dans laquelle une cavité de débordement (1046) est enfermée par la surface externe du plateau de friture (1042) et la surface interne du bac à friture (1044), et la cavité de débordement (1046) communique avec la partie de débordement (122).

9. Friteuse à air chaud (10) selon la revendication 7, dans laquelle le plateau de friture (1042) est doté d'un déflecteur (1048) et d'un premier orifice de débordement (1050), le premier orifice de débordement (1050) est situé au niveau du côté périphérique du déflecteur (1048), et la partie de débordement (122) est disposée de manière à correspondre au déflecteur (1048).

10. Friteuse à air chaud (10) selon la revendication 9, dans laquelle une partie du plateau de réception d'huile (120) fait saillie dans la direction de la cavité de cuisson (110) pour former une structure en saillie (124), la structure en saillie (124) est dotée de la partie de débordement (122), et la partie du plateau de réception d'huile (120) située au niveau du côté périphérique de la structure en saillie (124) est disposée de manière à correspondre au premier orifice de débordement (1050).

11. Friteuse à air chaud (10) selon la revendication 6, dans laquelle au moins l'un du corps de machine (102) et du support (104) est doté d'un canal d'écoulement de fumée (106), et le canal d'écoulement de fumée (106) fait communiquer la partie de débordement (122) avec la boîte à fumée (200).

12. Friteuse à air chaud (10) selon la revendication 11, dans laquelle le nombre de canaux d'écoulement de fumée (106) est multiple, et la pluralité de canaux d'écoulement de fumée (106) sont agencés à intervalles le long de la direction circonférentielle de la cavité de cuisson (110).

13. Friteuse à air chaud (10) selon la revendication 11, comprenant en outre :
un filtre (500), disposé dans le canal d'écoulement de fumée (106).

14. Friteuse à air chaud (10) selon la revendication 6, dans laquelle le corps de machine (102) est doté d'un élément d'étanchéité (600), l'élément d'étanchéité (600) vient buter contre la surface externe du support (104), et l'élément d'étanchéité (600) est disposé de manière à entourer la partie de débordement (122).

15. Friteuse à air chaud (10) selon la revendication 6, dans laquelle le corps de machine (102) comprend : un logement (1030), dans laquelle le logement (1030) est doté d'une première sortie (1024), d'une seconde sortie (1028), d'un premier passage (1022) et d'un second passage (1026), le premier passage (1022) fait communiquer la cavité de cuisson (110) avec la première sortie (1024), et le second passage (1026) communique avec la seconde sortie (1028) ; une plaque de séparation (1031), disposée dans le logement (1030), dans laquelle la plaque de séparation (1031) comprend une première surface d'extrémité et une seconde surface d'extrémité qui sont disposées l'une en face de l'autre dans la direction de hauteur du corps de machine (102), la première surface d'extrémité forme une partie de la surface de paroi du premier passage (1022), la seconde surface d'extrémité forme une partie de la surface de paroi du second passage (1026), et la plaque de séparation (1031) est située entre la première sortie (1024) et la seconde sortie (1028) ; et l'appareil à air chaud comprend le moteur (410), et au moins une partie du moteur (410) est située dans le second passage (1026).
